# EUROPEAN PATENT APPLICATION

(11) **EP 4 685 941 A1**
(43) Date of publication of application: **28.01.2026**
(21) Application number: 24775008.6
(22) Date of filing: 22.03.2024
(51) Int. Cl.: H01M 50/134, H01G 11/78, H01G 11/84, H01M 10/0562, H01M 50/105, H01M 50/119, H01M 50/121, H01M 50/129, H01M 50/133

(54) **EXTERIOR MATERIAL FOR POWER STORAGE DEVICE, PRODUCTION METHOD FOR SAME, AND POWER STORAGE DEVICE**

(30) Priority: 22.03.2023 JP 2023046077; 22.12.2023 JP 2023217005
(71) Applicant: Dai Nippon Printing Co., Ltd., Tokyo 162-8001 (JP)
(72) Inventor: OKANO, Ai, Tokyo 162-8001 (JP); SASAKI, Miho, Tokyo 162-8001 (JP)
(74) Representative: Müller-Boré & Partner Patentanwälte PartG mbB
(86) International application number: PCT/JP2024/011517
(87) International publication number: WO 2024/195875

(57) **Abstract**

Provided is an exterior material for a power storage device, the exterior material being formed from a laminate comprising at least a base material layer, a barrier layer, and a thermally-fusible resin layer in this order from the outside, and the exterior material having a tensile strength at break of 180 MPa or greater as measured by the method below, and having a creep resistance characteristic of 10 minutes or more as measured by the method below. <Measurement of tensile strength at break> Each tensile strength at break in the machine direction (MD) of the exterior material for the power storage device is measured by a method compliant with the provisions of JIS K7127:1999 by using a tensile tester. The measurement conditions are such that a dumbbell 7 shape is used for a sample shape, the distance between target lines is 10 mm, the tensile speed is 0.5 mm/min, the test environment is set to a temperature of 120°C, and the average value from three measurements is used. <Measurement of creep resistance characteristic> The exterior material for a power storage device is cut out so as to have a width of 60 mm in the transverse direction (TD) and a length of 150 mm in the MD direction and is then folded in half such that the thermally-fusible resin layer is positioned at the inside. The folded exterior material is then heat sealed using a 7 mm heat seal bar at a position 10 mm from the fold such that the thickness of the thermally-fusible resin layer is in a range of 60-95% the thickness prior to sealing. The resulting heat-sealed exterior material for a power storage device is then cut to a width of 15 mm to form a sample. Both of the mutually opposing ends of the sample are affixed to respective SUS plates (stainless steel plates) by using an adhesive, and a weight of 2 kg is applied to one side. The end on the opposite side is hung from the top of a thermostatic bath and stored in the thermostatic bath at 150°C. The creep resistance is evaluated using the time until the sealed part opens. The SUS plates that are used have a thickness of 2 mm, a width of 30 mm, a length of 100 mm, and a weight of 42.5 g, and one side of the SUS plates is S-shaped.

## Description

### Technical Field

The present disclosure relates to an exterior material for electrical storage devices, a method for manufacturing the exterior material for electrical storage devices, and an electrical storage device.

### Background Art

Various types of electrical storage devices have been developed heretofore, and in every electrical storage device, an exterior material is an essential member for sealing electrical storage device elements such as an electrode and an electrolyte. Metallic exterior materials have been often used heretofore as exterior materials for electrical storage devices.

On the other hand, in recent years, electrical storage devices have been required to be diversified in shape and to be thinned and lightened with improvement of performance of electric cars, hybrid electric cars, personal computers, cameras, mobile phones and so on. However, metallic exterior material for electrical storage devices that have often been heretofore used have the disadvantage that it is difficult to keep up with diversification in shape, and there is a limit on weight reduction.

Thus, in recent years, a film-shaped laminate with a base material layer, a barrier layer, and a heat-sealable resin layer laminated in this order has been proposed as an exterior material for electrical storage devices which is easily processed into diversified shapes and is capable of achieving thickness reduction and weight reduction (see, for example, PTL 1).

In such an exterior material for electrical storage devices, generally, a concave portion is formed by cold molding, electrical storage device elements such as an electrode and an electrolytic solution are disposed in a space formed by the concave portion, and heat-sealable resin layers are heat-sealed to obtain an electrical storage device with electrical storage device elements housed in the exterior material for electrical storage devices.

### Citation List

### Patent Literature

PTL 1: Japanese Patent Laid-open Publication No. 2008-287971

### Summary of Invention

### Technical Problem

In recent years, since the weight of an electrical storage device tends to increase due to an increase in capacity of the electrical storage device, high load resistance is also required for an exterior material for electrical storage devices. For example, in an all-solid-state battery, since a liquid is not used for an electrolyte, it is assumed that the temperature of the battery is 100°C or higher at the time of charging, and it is required to exhibit a high sealing strength even in a high-temperature environment of, for example, 150°C.

Under these circumstances, a main object of the present disclosure is to provide an exterior material for electrical storage devices which has high load resistance and exhibits a high sealing strength in a high-temperature environment of 150°C. Another object of the present disclosure is to provide a method for manufacturing the exterior material for electrical storage devices, and an electrical storage device obtained using the exterior material for electrical storage devices.

### Solution to Problem

The inventors of the present disclosure have extensively conducted studies for solving the above-described problems. As a result, it has been found that, in an exterior material for electrical storage devices which includes a laminate including at least a base material layer, a barrier layer, and a heat-sealable resin layer in this order from the outside, by setting each of a tensile rupture strength and creep resistance characteristic to a predetermined value or more, high load resistance and a high sealing strength in a high-temperature environment of 150°C are exhibited.

The present disclosure has been completed by further conducting studies based on these novel findings. That is, the present disclosure provides an invention as described below.

An exterior material for electrical storage devices, including a laminate including at least a base material layer, a barrier layer, and a heat-sealable resin layer in this order from the outside, in which
a tensile rupture strength as measured by the following method is 180 MPa or more, and a creep resistance characteristic as measured by the following method is 10 minutes or more.

### <Measurement of tensile rupture strength>

The tensile rupture strength of the exterior material for electrical storage devices in a machine direction is measured using a tensile tester by a method in accordance with a provision of JIS K7127:1999. Measurement conditions are such that a shape in accordance with dumbbell no. 7 is used for a sample shape, a reference line distance is 10 mm, a tensile speed is 0.5 mm/min, and a test environment is 120°C, and an average value obtained by performing measurement three times is adopted.

### <Measurement of creep resistance characteristic>

The exterior material for electrical storage devices is cut out to have a width of 60 mm in a transverse direction and a length of 150 mm in a machine direction, is double-folded such that the heat-sealable resin layer is positioned on the inner side, and is heat-sealed at a position of 10 mm from the fold with a 7-mm heat seal bar such that a thickness of the heat-sealable resin layer is in a range of 60% or more and 95% or less of a thickness of the heat-sealable resin layer before sealing (that is, the exterior material for electrical storage devices is cut out to have a width of 60 mm in the transverse direction and a length of 150 mm in the machine direction, the exterior material for electrical storage devices is double-folded in the machine direction at an intermediate position in the machine direction such that the heat-sealable resin layers face to each other, and heat-sealing is performed at a position retracted by 10 mm in the machine direction from the fold with a 7-mm heat seal bar such that a thickness of the heat-sealable resin layer is in a range of 60% or more and 95% or less before sealing). The heat-sealed exterior material for electrical storage devices is cut out to have a width of 15 mm so as to obtain a sample. Both of mutually opposing ends of the sample are pasted to a SUS plate (stainless steel plate) with an adhesive agent, respectively, and a weight of 2 kg is applied to one side. The end on the opposite side is hung from the top of a thermostatic bath and stored in the thermostatic bath at 150°C. A SUS plate having a thickness of 2 mm, a width of 30 mm, a length of 100 mm, and a weight of 42.5 g and having one S-shaped side is used.

### <Load resistance evaluation of exterior material for electrical storage devices>

Two exterior materials for electrical storage devices are cut out to have a width of 300 mm in the transverse direction and a length of 300 mm in the machine direction. The heat-sealable resin layers of the two exterior materials for electrical storage devices are opposed to each other, two sides opposed to each other are heat-sealed (seal width: 7 mm) under the conditions of 240°C and a surface pressure of 1 MPa for 3 seconds, and the remaining one side of 300 mm is also heat-sealed (seal width: 7 mm) to bring about a three-side sealed state. Next, a stainless steel plate having a length of 97 mm, a width of 70 mm, a thickness of 38 mm, and a weight of 2100 g is inserted between the heat-sealable resin layers (the length of the stainless steel plate is 97 mm in the insertion direction). Two corners of one side of the opened pouch (inner size: 286 mm × 293 mm) thus obtained are fixed with clips, and the pouch is left to stand still for 3 minutes in a suspended state so that the machine direction is the vertical direction, then the exterior material for electrical storage devices is observed, and evaluation of A and C is performed based on the following evaluation criteria 1. A stainless steel plate having a weight of 2100 g is inserted between the heat-sealable resin layers of the pouch, the weight at which the exterior material for electrical storage devices is broken is examined, and evaluation of A to C is performed based on the following evaluation criteria 2.

### (Evaluation criteria 1 of load resistance)

A: There are no pinholes and no tearing in the exterior material for electrical storage devices.

C: There are pinholes or tearing in the exterior material for electrical storage devices.

### (Evaluation criteria 2 of load resistance)

A: The exterior material for electrical storage devices is not broken at 4200 g.

B: The exterior material for electrical storage devices is not broken at 2100 g but is broken at 4200 g.

C: The exterior material for electrical storage devices is broken at 2100 g. Advantageous Effects of Invention

According to the present disclosure, it is possible to provide an exterior material for electrical storage devices which has high load resistance and exhibits a high sealing strength in a high-temperature environment of 150°C. According to the present disclosure, it is also possible to provide a method for manufacturing the exterior material for electrical storage devices, and an electrical storage device obtained using the exterior material for electrical storage devices.

### Brief Description of Drawings

[Fig. 1] Fig. 1 is a schematic diagram showing an example of a cross-sectional structure of an exterior material for electrical storage devices according to the present disclosure.
[Fig. 2] Fig. 2 is a schematic diagram showing an example of a cross-sectional structure of the exterior material for electrical storage devices according to the present disclosure.
[Fig. 3] Fig. 3 is a schematic diagram showing an example of a cross-sectional structure of the exterior material for electrical storage devices according to the present disclosure.
[Fig. 4] Fig. 4 is a schematic diagram showing an example of a cross-sectional structure of an exterior material for electrical storage devices according to the present disclosure.
[Fig. 5] Fig. 5 is a schematic diagram for illustrating a method for housing an electrical storage device element in a packaging formed from the exterior material for electrical storage devices according to the present disclosure.
[Fig. 6] Fig. 6 is a schematic diagram for illustrating a method for measuring a sealing strength.
[Fig. 7] Fig. 7 is a schematic diagram for illustrating the method for measuring a sealing strength.

### Description of Embodiments

An exterior material for electrical storage devices of the present disclosure includes a laminate including at least a base material layer, a barrier layer, and a heat-sealable resin layer in this order from the outside, in which a tensile rupture strength as measured by the following method is 180 MPa or more, and a creep resistance characteristic as measured by the following method is 10 minutes or more. With the above characteristics, the exterior material for electrical storage devices of the present disclosure exhibits high load resistance and a high sealing strength in a high-temperature environment of 150°C.

### <Measurement of tensile rupture strength>

The tensile rupture strength of the exterior material for electrical storage devices in a machine direction is measured using a tensile tester by a method in accordance with a provision of JIS K7127:1999. Measurement conditions are such that a shape in accordance with dumbbell no. 7 is used for a sample shape, a reference line distance is 10 mm, a tensile speed is 0.5 mm/min, and a test environment is 120°C, and an average value obtained by performing measurement three times is adopted.

### <Measurement of creep resistance characteristic>

The exterior material for electrical storage devices is cut out to have a width of 60 mm in a transverse direction and a length of 150 mm in a machine direction, is double-folded such that the heat-sealable resin layer is positioned on the inner side, and is heat-sealed at a position of 10 mm from the fold with a 7-mm heat seal bar such that a thickness of the heat-sealable resin layer is in a range of 60% or more and 95% or less of a thickness of the heat-sealable resin layer before sealing (that is, the exterior material for electrical storage devices is cut out to have a width of 60 mm in the transverse direction and a length of 150 mm in the machine direction, the exterior material for electrical storage devices is double-folded in the machine direction at an intermediate position in the machine direction such that the heat-sealable resin layers face to each other, and heat-sealing is performed at a position retracted by 10 mm in the machine direction from the fold with a 7-mm heat seal bar such that a thickness of the heat-sealable resin layer is in a range of 60% or more and 95% or less before sealing). The heat-sealed exterior material for electrical storage devices is cut out to have a width of 15 mm so as to obtain a sample. Both of mutually opposing ends of the sample are pasted to a SUS plate (stainless steel plate) with an adhesive agent, respectively, and a weight of 2 kg is applied to one side. The end on the opposite side is hung from the top of a thermostatic bath and stored in the thermostatic bath at 150°C. Creep resistance is evaluated based on a time until a sealing portion is opened. A SUS plate having a thickness of 2 mm, a width of 30 mm, a length of 100 mm, and a weight of 42.5 g and having one S-shaped side is used.

Hereinafter, the exterior material for electrical storage devices according to the present disclosure will be described in detail. In the present disclosure, a numerical range indicated by the term "A to B" means "A or more" and "B or less". For example, the expression of "2 to 15 mm" means 2 mm or more and 15 mm or less. In numerical ranges serially described in the present disclosure, an upper limit value or a lower limit value described for a numerical range may be replaced by an upper limit value or a lower limit value of one of other serially described numerical ranges. Upper limit values, upper and lower limit values, or lower limit values, which are described for different ranges, may be combined to form a numerical range. In numerical ranges described in the present disclosure, an upper limit value or a lower limit value described for a numerical range may be replaced by a value shown in an example.

In the exterior material for electrical storage devices, Machine Direction (MD) and Transverse Direction (TD) in the process for manufacturing thereof can be discriminated from each other for a barrier layer 3 described later. For example, when the barrier layer 3 includes a metal foil such as an aluminum alloy foil or a stainless steel foil, linear streaks called rolling indentations are formed on the surface of the metal foil in the rolling direction (RD) of the metal foil. Since the rolling indentations extend along the rolling direction, the rolling direction of the metal foil can be known by observing the surface of the metal foil. In the process for manufacturing of the laminate, the MD of the laminate and the RD of the metal foil normally coincide with each other, and therefore by observing the surface of the metal foil of the laminate to identify the rolling direction (RD) of the metal foil, the MD of the laminate can be identified. Since the TD of the laminate is perpendicular to the MD of the laminate, the TD of the laminate can be identified.

When the MD of the exterior material for electrical storage devices cannot be identified by the rolling indentations of the metal foil such as an aluminum alloy foil or a stainless steel foil, the MD can be identified by the following method. Examples of the method for identifying the MD of the exterior material for electrical storage devices include a method in which a cross-section of the heat-sealable resin layer of the exterior material for electrical storage devices is observed with an electron microscope to examine a sea-island structure. In the method, the direction parallel to a cross-section in which the average of the diameters of the island shapes in a direction perpendicular to the thickness direction of the heat-sealable resin layer is maximum can be determined as MD. Specifically, a cross-section in the length direction of the heat-sealable resin layer and cross-sections (a total of 10 cross-sections) at angular intervals of 10 degrees from a direction parallel to the cross-section in the length direction to a direction perpendicular to the cross-section in the length direction are observed with an electron microscope photograph to examine sea-island structures. Next, in each cross-section, the shape of each island is observed. For the shape of each island, the linear distance between the leftmost end in a direction perpendicular to the thickness direction of the heat-sealable resin layer and the rightmost end in the perpendicular direction is taken as a diameter y. In each cross-section, the average of the top 20 diameters y in descending order of the diameter y of the island shape is calculated. The direction parallel to a cross-section having the largest average of the diameters y of the island shapes is determined as MD.

### 1. Laminated Structure and Physical Property of Exterior Material for Electrical Storage Devices

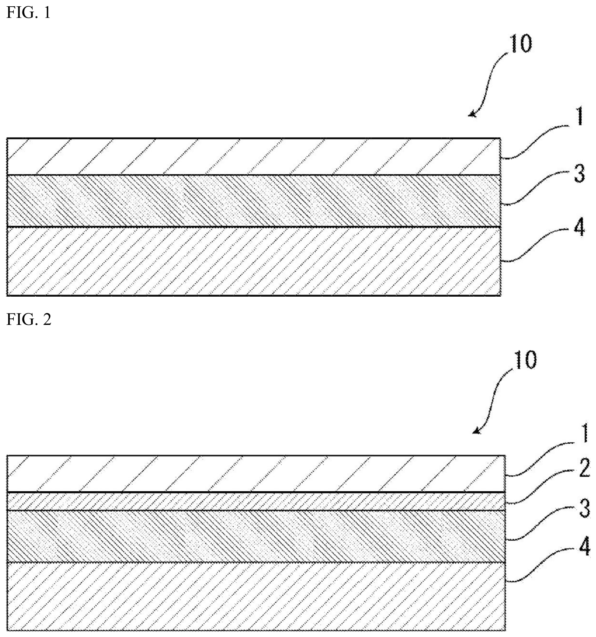

As shown in, for example, Figs. 1 to 4, an exterior material 10 for electrical storage devices according to the present disclosure includes a laminate including at least a base material layer 1, a barrier layer 3, and a heat-sealable resin layer 4 in this order. In the exterior material 10 for electrical storage devices, the base material layer 1 is on the outermost layer side, and the heat-sealable resin layer 4 is an innermost layer. In construction of an electrical storage device using the exterior material 10 for electrical storage devices and an electrical storage device element, the electrical storage device elements are put in a space formed by heat-sealing the peripheral portions of heat-sealable resin layers 4 of the exterior material 10 for electrical storage devices which face each other. In the laminate forming the exterior material 10 for electrical storage devices according to the present disclosure, a side of the heat-sealable resin layer 4 with respect to the barrier layer 3 is an inner side, and a side of the base material layer 1 with respect to the barrier layer 3 is an outer side, with respect to the barrier layer 3 as a reference.

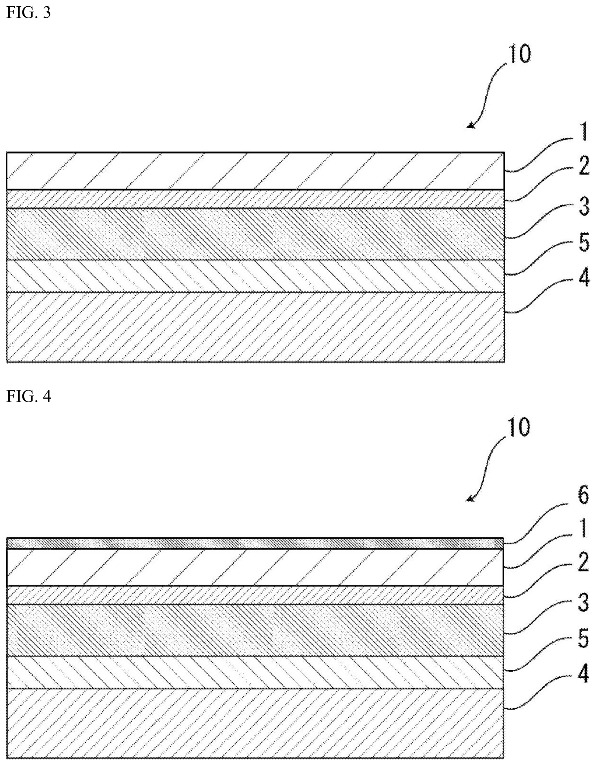

As shown in, for example, Figs. 2 to 4, the exterior material 10 for electrical storage devices may have an adhesive agent layer 2 between the base material layer 1 and the barrier layer 3 if necessary for the purpose of, for example, improving bondability between these layers. As shown in, for example, Figs. 3 and 4, an adhesive layer 5 may be present between the barrier layer 3 and the heat-sealable resin layer 4 if necessary for the purpose of, for example, improving bondability between these layers. As shown in Fig. 4, a surface coating layer 6 or the like may be provided on the outer side of the base material layer 1 (on a side opposite to the heat-sealable resin layer 4 side) if necessary.

The thickness of the laminate forming the exterior material 10 for electrical storage devices is not particularly limited, and is, for example, about 300 µm or less, about 280 µm or less, about 210 µm or less, preferably about 190 µm or less, about 180 µm or less, about 155 µm or less, or about 120 µm or less, from the viewpoint of cost reduction, energy density improvement, and the like. The thickness of the laminate forming the exterior material 10 for electrical storage devices is preferably about 35 µm or more, about 45 µm or more, or about 60 µm or more, from the viewpoint of maintaining the function of an exterior material for electrical storage devices, which is protection of an electrical storage device element. The thickness of the laminate forming the exterior material 10 for electrical storage devices is preferably in the range of, for example, about 35 to 300 µm, about 35 to 280 µm, about 35 to 210 µm, about 35 to 190 µm, about 35 to 180 µm, about 35 to 155 µm, about 35 to 120 µm, about 45 to 210 µm, about 45 to 190 µm, about 45 to 180 µm, about 45 to 300 µm, about 45 to 280 µm, about 45 to 155 µm, about 45 to 120 µm, about 60 to 300 µm, about 60 to 280 µm, about 60 to 210 µm, about 60 to 190 µm, about 60 to 180 µm, about 60 to 155 µm, or about 60 to 120 µm, and in particular, the thickness is preferably about 60 to 155 µm for reducing the weight and the thickness of the electrical storage device, and preferably about 155 to 190 µm for improving moldability.

The exterior material 10 for electrical storage devices can be suitably applied to all-solid-state batteries. Here, the thickness of the laminate forming the exterior material 10 for electrical storage devices is not particularly limited, and is preferably about 10000 µm or less, about 8000 µm or less, or about 5000 µm or less from the viewpoint of cost reduction, improvement of the energy density and the like, and preferably about 10 µm or more, about 15 µm or more, or about 20 µm or more from the viewpoint of maintaining the function of the exterior material for all-solid-state batteries, i.e., a function of protecting a battery element. The thickness of the laminate is preferably in the range of, for example, about 10 to 10000 µm, about 10 to 8000 µm, about 10 to 5000 µm, about 15 to 10000 µm, about 15 to 8000 µm, about 15 to 5000 µm, about 20 to 10000 µm, about 20 to 8000 µm, or about 20 to 5000 µm, particularly preferably about 20 to 5000 µm.

In the exterior material 10 for electrical storage devices, the ratio of the total thickness of the base material layer 1, the adhesive agent layer 2 provided if necessary, the barrier layer 3, the adhesive layer 5 provided if necessary, the heat-sealable resin layer 4, and the surface coating layer 6 provided if necessary to the thickness (total thickness) of the laminate forming the exterior material 10 for electrical storage devices is preferably 90% or more, more preferably 95% or more, and still more preferably 98% or more. As a specific example, in a case where the exterior material 10 for electrical storage devices of the present disclosure includes the base material layer 1, the adhesive agent layer 2, the barrier layer 3, the adhesive layer 5, and the heat-sealable resin layer 4, the ratio of the total thickness of these layers to the thickness (total thickness) of the laminate constituting the exterior material 10 for electrical storage devices is preferably 90% or more, more preferably 95% or more, and still more preferably 98% or more. When the exterior material 10 for electrical storage devices according to the present disclosure is a laminate including the base material layer 1, the adhesive agent layer 2, the barrier layer 3 and the heat-sealable resin layer 4, the ratio of the total thickness of these layers to the thickness (total thickness) of the laminate forming the exterior material 10 for electrical storage devices may be, for example, 80% or more, preferably 90% or more, more preferably 95% or more, still more preferably 98% or more.

The tensile rupture strength of the exterior material 10 for electrical storage devices of the present disclosure as measured by the following method is 180 MPa or more. From the viewpoint of more suitably exerting the effect of the invention of the present disclosure, the tensile rupture strength is preferably about 185 MPa or more, more preferably about 190 MPa or more, still more preferably about 200 MPa or more, and preferably about 1000 MPa or less, more preferably about 900 MPa or less, still more preferably about 800 MPa or less, and is preferably in the range of about 180 to 1000 MPa, about 180 to 900 MPa, about 180 to 800 MPa, about 185 to 1000 MPa, about 185 to 900 MPa, about 185 to 800 MPa, about 190 to 1000 MPa, about 190 to 900 MPa, about 190 to 800 MPa, about 200 to 1000 MPa, about 200 to 900 MPa, or about 200 to 800 MPa.

### <Measurement of tensile rupture strength>

The tensile rupture strength of the exterior material for electrical storage devices in a machine direction is measured using a tensile tester by a method in accordance with a provision of JIS K7127:1999. Measurement conditions are such that a shape in accordance with dumbbell no. 7 is used for a sample shape, a reference line distance is 10 mm, a tensile speed is 0.5 mm/min, and a test environment is 120°C, and an average value obtained by performing measurement three times is adopted.

Further, the creep resistance characteristic of the exterior material 10 for electrical storage devices of the present disclosure as measured by the following method is 10 minutes or more. From the viewpoint of more suitably exerting the effect of the invention of the present disclosure, the creep resistance characteristic is preferably about 15 minutes or more, more preferably about 30 minutes or more, still more preferably about 60 minutes or more, and preferably about 22000 minutes or less, more preferably about 20000 minutes or less, still more preferably about 19000 minutes or less, and is preferably in the range of about 10 to 22000 minutes, about 10 to 20000 minutes, about 10 to 19000 minutes, about 15 to 22000 minutes, about 15 to 20000 minutes, about 15 to 19000 minutes, about 30 to 22000 minutes, about 30 to 20000 minutes, about 30 to 19000 minutes, about 60 to 22000 minutes, about 60 to 20000 minutes, or about 60 to 19000 minutes.

### <Measurement of creep resistance characteristic>

The exterior material for electrical storage devices is cut out to have a width of 60 mm in a transverse direction and a length of 150 mm in a machine direction, is double-folded such that the heat-sealable resin layer is positioned on the inner side, and is heat-sealed at a position of 10 mm from the fold with a 7-mm heat seal bar such that a thickness of the heat-sealable resin layer is in a range of 60% or more and 95% or less of a thickness of the heat-sealable resin layer before sealing (that is, the exterior material for electrical storage devices is cut out to have a width of 60 mm in the transverse direction and a length of 150 mm in the machine direction, the exterior material for electrical storage devices is double-folded in the machine direction at an intermediate position in the machine direction such that the heat-sealable resin layers face to each other, and heat-sealing is performed at a position retracted by 10 mm in the machine direction from the fold with a 7-mm heat seal bar such that a thickness of the heat-sealable resin layer is in a range of 60% or more and 95% or less before sealing). The heat-sealed exterior material for electrical storage devices is cut out to have a width of 15 mm so as to obtain a sample. Both of mutually opposing ends of the sample are pasted to a SUS plate (stainless steel plate) with an adhesive agent, respectively, and a weight of 2 kg is applied to one side. The end on the opposite side is hung from the top of a thermostatic bath and stored in the thermostatic bath at 150°C. A SUS plate having a thickness of 2 mm, a width of 30 mm, a length of 100 mm, and a weight of 42.5 g and having one S-shaped side is used. Creep resistance is evaluated based on a time until a sealing portion is opened. The measurement is performed three times, and the average value is evaluated.

### (Evaluation criteria of creep resistance characteristic)

A: The sealing portion does not open for 10 minutes or more.

C: The sealing portion opens in less than 10 minutes.

In the exterior material 10 for electrical storage devices according to the present disclosure, the sealing strength in an environment of 150°C is preferably 40 N/15 mm or more, more preferably 45 N/15 mm or more as measured by the following measurement method. The upper limit of the sealing strength is, for example, 200 N/15 mm or less, preferably 150 N/15 mm or less. The sealing strength is preferably in the range of about 40 to 200 N/15 mm, about 40 to 150 N/15 mm, about 45 to 200 N/15 mm, or about 45 to 150 N/15 mm.

<Measurement of sealing strength in environment of 150°C>

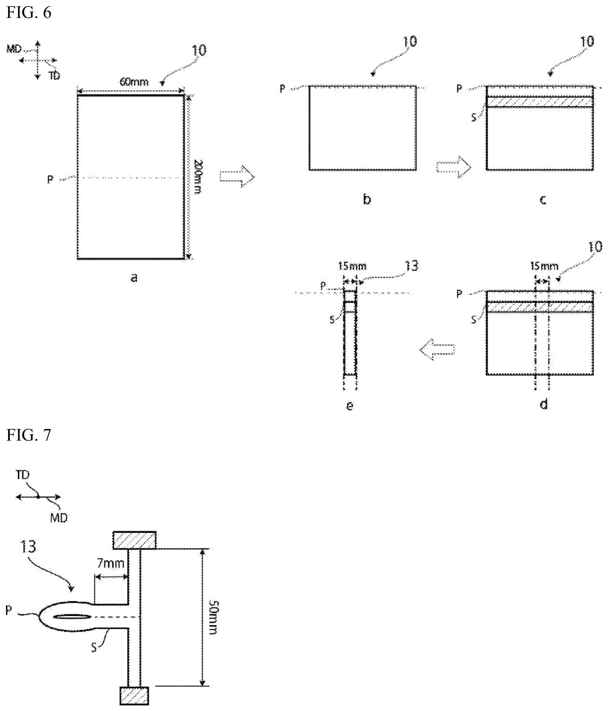

As specified in JIS K 7127:1999, the sealing strength of the exterior material at a measurement temperature of 150°C is measured as follows. A test piece obtained by cutting the exterior material into a strip shape having a width of 15 mm in a transverse direction is prepared by the following procedure. Specifically, as shown in Fig. 6, each exterior material is cut to a size of 60 mm (transverse direction) × 200 mm (machine direction) (Fig. 6a). Next, the exterior material is double-folded in the machine direction at the position of the fold P (intermediate in the machine direction) such that the heat-sealable resin layers face each other (Fig. 6b). The heat-sealable resin layers are heat-sealed on the inner side in the machine direction by 10 mm from the fold P under the conditions of a seal width of 7 mm, a temperature of 240°C, a surface pressure of 1 MPa and 3 seconds (Fig. 6c). In Fig. 6c, the shaded portion S is a heat-sealed portion. Next, a test piece 13 is obtained by cutting the exterior material in the machine direction (cutting the exterior material at the position of the two-dot chain line in Fig. 6d) in such a manner that the width in the transverse direction is 15 mm (Fig. 6e). Next, the test piece 13 is allowed to stand in an environment at a temperature of 150°C for 2 minutes, and the heat-sealable resin layer at the heat-sealed part is delaminated at a speed of 300 mm/min with a tensile tester in an environment at a temperature of 150°C (Fig. 7). The maximum strength during the delamination is taken as sealing strength (N/15 mm). A chuck-to-chuck distance is 50 mm. The measurement is performed three times, and the average value is adopted.

### 2. Layers forming exterior material for electrical storage devices

### [Base material layer 1]

In the present disclosure, the base material layer 1 is a layer provided for the purpose of, for example, exhibiting a function as a base material of the exterior material for electrical storage devices. The base material layer 1 is located on the outer layer side of the exterior material for electrical storage devices.

The material that forms the base material layer 1 is not particularly limited as long as it has a function as a base material, i.e. at least insulation quality. The base material layer 1 can be formed using, for example, a resin, and the resin may contain additives described later.

When the base material layer 1 is formed of a resin, the base material layer 1 can be formed from, for example, a resin film. When the base material layer 1 is formed from a resin film, a resin film formed in advance may be used as the base material layer 1 in manufacturing of the exterior material 10 for electrical storage devices according to the present disclosure by laminating the base material layer 1 with the barrier layer 3. A resin for forming the base material layer 1 may be formed into a film on the surface of the barrier layer 3 or the like by extrusion molding, coating or the like to obtain the base material layer 1 formed of a resin film. The resin film may be an unstretched film or a stretched film. Examples of the stretched film include uniaxially stretched films and biaxially stretched films, and biaxially stretched films are preferable. Examples of the stretching method for forming a biaxially stretched film include a sequential biaxial stretching method, an inflation method, and a simultaneous biaxial stretching method. Examples of the method for applying a resin include a roll coating method, a gravure coating method and an extrusion coating method.

Examples of the resin that forms the base material layer 1 include resins such as polyester, polyamide, polyolefin, epoxy resin, acrylic resin, fluororesin, polyurethane, silicone resin and phenol resin, and modified products of these resins. The resin that forms the base material layer 1 may be a copolymer of these resins or a modified product of the copolymer. Further, a mixture of these resins may be used.

It is preferable that the base material layer 1 contains any of these resins as a main component, more preferably polyester or polyamide as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the base material layer 1. For example, the phrase "the base material layer 1 contains polyester or polyamide as a main component" means that the content ratio of polyester or polyamide is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the base material layer 1.

Of these resins, polyester and polyamide are preferable as resins that form the base material layer 1.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolyester that are polymerized with ethylene isophthalate and include ethylene terephthalate as a main repeating unit (abbreviated as polyethylene(terephthalate/isophthalate); hereinafter similarly abbreviated), polyethylene(terephthalate/adipate), polyethylene(terephthalate/sodium sulfoisophthalate), polyethylene(terephthalate/sodium isophthalate), polyethylene(terephthalate/phenyl-dicarboxylate) and polyethylene(terephthalate/decane dicarboxylate). These polyesters may be used alone, or may be used in combination of two or more thereof.

Specific examples of the polyamide include polyamides such as aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a constituent unit derived from terephthalic acid and/or isophthalic acid, such as nylon 6I, nylon 6T, nylon 6IT and nylon 6I6T (I denotes isophthalic acid and T denotes terephthalic acid), and polyamides containing aromatics, such as polyamide MXD6 (polymethaxylylene adipamide); cycloaliphatic polyamides such as polyamide PACM6 (polybis(4-aminocyclohexyl)methaneadipamide); polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

The base material layer 1 contains preferably at least one of a polyester film, a polyamide film and a polyolefin film, preferably at least one of a stretched polyester film, a stretched polyamide film and a stretched polyolefin film, still more preferably at least one of a stretched polyethylene terephthalate film, a stretched polybutylene terephthalate film, a stretched nylon film and a stretched polypropylene film, still more preferably at least one of a biaxially stretched polyethylene terephthalate film, a biaxially stretched polybutylene terephthalate film, a biaxially stretched nylon film, and a biaxially stretched polypropylene film.

The base material layer 1 may be a single layer, or may include two or more layers. When the base material layer 1 includes two or more layers, the base material layer 1 may be a laminate obtained by laminating resin films with an adhesive agent or the like, or a resin film laminate obtained by co-extruding resins to form two or more layers. The resin film laminate obtained by co-extruding resins to form two or more layers may be used as the base material layer 1 in an unstretched state, or may be uniaxially stretched or biaxially stretched and used as the base material layer 1.

Specific examples of the resin film laminate with two or more layers in the base material layer 1 include laminates of a polyester film and a nylon film, nylon film laminates with two or more layers, and polyester film laminates with two or more layers. Laminates of a stretched nylon film and a stretched polyester film, stretched nylon film laminates with two or more layers, and stretched polyester film laminates with two or more layers are preferable. For example, when the base material layer 1 is a resin film laminate with two layers, the base material layer 1 is preferably a laminate of a polyester resin film and a polyester resin film, a laminate of a polyamide resin film and a polyamide resin film, or a laminate of a polyester resin film and a polyamide resin film, more preferably a laminate of a polyethylene terephthalate film and a polyethylene terephthalate film, a laminate of a nylon film and a nylon film, or a laminate of a polyethylene terephthalate film and a nylon film. Since the polyester resin is hardly discolored even in the case where for example, an electrolytic solution is deposited on the surface, it is preferable that the polyester resin film is located at the outermost layer of the base material layer 1 when the base material layer 1 is a resin film laminate with two or more layers.

When the base material layer 1 is a resin film laminate with two or more layers, the two or more resin films may be laminated with an adhesive agent interposed therebetween. Specific examples of the preferred adhesive agent include the same adhesive agents as those exemplified for the adhesive agent layer 2 described later. The method for laminating a resin film having two or more layers is not particularly limited, and a known method can be employed. Examples thereof include a dry lamination method, a sandwich lamination method, an extrusion lamination method and a thermal lamination method, and a dry lamination method is preferable. When the resin film is laminated by a dry lamination method, it is preferable to use a polyurethane adhesive agent as the adhesive agent. Here, the thickness of the adhesive agent is, for example, about 2 to 5 µm. The lamination may be performed with an anchor coat layer formed on the resin film. Examples of the anchor coat layer include the same adhesive agents as those exemplified for the adhesive agent layer 2 described later. Here, the thickness of the anchor coat layer is, for example, about 0.01 to 1.0 µm.

Additives such as a slipping agent, a flame retardant, an antiblocking agent, an antioxidant, a light stabilizer, a tackifier, an antistatic agent, and a colorant may be present on at least one of the surface of the base material layer 1 and/or inside the base material layer 1. The additives may be used alone, or may be used in combination of two or more thereof.

In the present disclosure, it is preferable that a slipping agent is present on the surface of the base material layer 1 and/or inside the base material layer 1 from the viewpoint of enhancing the moldability of the exterior material for electrical storage devices. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylol amide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylene bisbehenamide, hexamethylenehydroxystearic acid amide, N,N'-distearyl adipic acid amide and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyl adipic acid amide and N,N'- dioleylsebacic acid amide. Specific examples of the fatty acid ester amide include stearamide ethyl stearate. Specific examples of the aromatic bisamide include m-xylylenebisstearic acid amide, m-xylylenebishydroxystearic acid amide and N,N'- distearyl isophthalic acid amide. The slipping agents may be used alone, or may be used in combination of two or more thereof, and are preferably used in combination of two or more thereof.

When the slipping agent is present on the surface of the base material layer 1, the amount of the slipping agent present is not particularly limited, and is, for example, about 3 mg/m² or more, preferably about 4 mg/m² or more, still more preferably about 5 mg/m² or more. The amount of the slipping agent present on the surface of the base material layer 1 is, for example, about 15 mg/m² or less, preferably about 14 mg/m² or less, still more preferably about 10 mg/m² or less. The amount of the slipping agent present on the surface of the base material layer 1 is preferably in the range of about 3 to 15 mg/m², about 3 to 14 mg/m², about 3 to 10 mg/m², about 4 to 15 mg/m², about 4 to 14 mg/m², about 4 to 10 mg/m², about 5 to 15 mg/m², about 5 to 14 mg/m², or about 5 to 10 mg/m².

The slipping agent present on the surface of the base material layer 1 may be one obtained by exuding the slipping agent contained in the resin forming the base material layer 1, or one obtained by applying the slipping agent to the surface of the base material layer 1.

The thickness of the base material layer 1 is not particularly limited as long as a function as a base material is performed, and the thickness of the base material layer 1 is, for example, about 3 µm or more, preferably about 10 µm or more. The thickness of the base material layer 1 is, for example, about 50 µm or less, preferably about 35 µm or less, 13 µm or less, 11 µm or less, 8 µm or less, 7 µm or less, or 6 µm or less. The thickness of the base material layer 1 is preferably in the range of about 3 to 50 µm, about 3 to 35 µm, about 3 to 13 µm, about 3 to 11 µm, about 3 to 8 µm, about 3 to 7 µm, about 3 to 6 µm, about 10 to 50 µm, about 10 to 35 µm, or about 10 to 13 µm, and in particular, the thickness is preferably about 3 to 35 µm, about 3 to 11 µm, about 3 to 8 µm, about 3 to 7 µm, or about 3 to 6 µm for reducing the weight and the thickness of the electrical storage device, and preferably about 35 to 50 µm for improving moldability. When the base material layer 1 is a resin film laminate with two or more layers, the thickness of the resin film forming each layer is not particularly limited, and is, for example, about 2 µm or more, preferably about 10 µm or more, or about 18 µm or more. The thickness of the resin film forming each layer is, for example, about 33 µm or less, preferably about 28 µm or less, about 23 µm or less, about 18 µm or less, 11 µm or less, or 8 µm or less. The thickness of the resin film forming each layer is preferably in the range of about 2 to 33 µm, about 2 to 28 µm, about 2 to 23 µm, about 2 to 18 µm, about 2 to 11 µm, about 2 to 8 µm, about 10 to 33 µm, about 10 to 28 µm, about 10 to 23 µm, about 10 to 18 µm, about 18 to 33 µm, about 18 to 28 µm, or about 18 to 23 µm.

When the base material layer 1 contains a colorant, the exterior material for electrical storage devices can be colored. As the colorant, known colorants such as pigments and dyes can be used. The colorants may be used alone, or may be used in combination of two or more thereof.

The type of pigment is not particularly limited as long as the function of the base material layer 1 is not impaired. Examples of the organic pigment include azo-based pigments, phthalocyanine-based pigments, quinacridone-based pigments, anthraquinone-based pigments, dioxazine-based pigments, indigothioindigo-based pigments, perinone-perylene-based pigments, isoindolenine-based pigments and benzimidazolone-based pigments. Examples of the inorganic pigment include carbon black-based pigments, titanium oxide-based pigments, cadmium-based pigments, lead-based pigments, chromium-based pigments and iron-based pigments, and also fine powder of mica (mica) and fish scale foil.

Of the colorants, carbon black is preferable for the purpose of, for example, blackening the appearance of the exterior material for electrical storage devices. From the viewpoint of dissipating heat generated from the electrical storage device, mica is preferably used.

The average particle size of the pigment is not particularly limited, and is, for example, about 0.03 to 5 µm, preferably about 0.05 to 2 µm. The average particle size of the pigment is a median diameter measured by a laser diffraction/scattering particle size distribution measuring apparatus.

The content of the colorant in the base material layer 1 is not particularly limited as long as the exterior material for electrical storage devices is colored, and the content is, for example, about 5 to 60 mass%, preferably about 10 to 40 mass%.

### [Adhesive agent layer 2]

In the exterior material for electrical storage devices according to the present disclosure, the adhesive agent layer 2 is a layer provided between the base material layer 1 and the barrier layer 3 if necessary for the purpose of enhancing bondability between these layers.

The adhesive agent layer 2 is formed from an adhesive agent capable of bonding the base material layer 1 and the barrier layer 3. The adhesive agent used for forming the adhesive agent layer 2 is not limited, and may be any of a chemical reaction type, a solvent volatilization type, a heat melting type, a heat pressing type, and the like. The adhesive agent may be a two-liquid curable adhesive agent (two-liquid adhesive agent), a one-liquid curable adhesive agent (one-liquid adhesive agent), or a resin that does not involve curing reaction. The adhesive agent layer 2 may be a single layer or a multi-layer.

Specific examples of the adhesive component contained in the adhesive agent include polyester such as polyethylene terephthalate, polybutylene terephthalate, polyethylene naphthalate, polybutylene naphthalate, polyethylene isophthalate and copolyester; polyether; polyurethane; epoxy resins; phenol resins; polyamides such as nylon 6, nylon 66, nylon 12 and copolymerized polyamide; polyolefin-based resins such as polyolefins, cyclic polyolefins, acid-modified polyolefins and acid-modified cyclic polyolefins; polyvinyl acetate; cellulose; (meth)acrylic resins; polyimide; polycarbonate; amino resins such as urea resins and melamine resins; rubbers such as chloroprene rubber, nitrile rubber and styrene-butadiene rubber; and silicone resins. These adhesive components may be used alone, or may be used in combination of two or more thereof. Of these adhesive components, polyurethane-based adhesive agents are preferable. The adhesive strength of these resins used as adhesive components can be increased by using an appropriate curing agent in combination. As the curing agent, appropriate one is selected from polyisocyanate, a polyfunctional epoxy resin, an oxazoline group-containing polymer, a polyamine resin, an acid anhydride and the like according to the functional group of the adhesive component.

Examples of the polyurethane adhesive agent include polyurethane adhesive agents containing a first component containing a polyol compound and a second component containing an isocyanate compound. The polyurethane adhesive agent is preferably a two-liquid curable polyurethane adhesive having polyol such as polyester polyol, polyether polyol or acrylic polyol as a first component, and aromatic or aliphatic polyisocyanate as a second component. Examples of the polyurethane adhesive agent include polyurethane adhesive agents containing an isocyanate compound and a polyurethane compound obtained by reacting a polyol compound with an isocyanate compound in advance. Examples of the polyurethane adhesive agent include polyurethane adhesive agents containing a polyol compound and a polyurethane compound obtained by reacting a polyol compound with an isocyanate compound in advance. Examples of the polyurethane adhesive agent include polyurethane adhesive agents obtained by reacting a polyol compound with an isocyanate compound to form a polyurethane compound in advance, and reacting the polyurethane compound with moisture in the air or the like. It is preferable that polyester polyol having a hydroxyl group in the side chain in addition to a hydroxyl group at the end of the repeating unit is used as the polyol compound. Examples of the second component include aliphatic, alicyclic, aromatic and araliphatic isocyanate-based compounds. Examples of the isocyanate-based compound include hexamethylene diisocyanate (HDI), xylylene diisocyanate (XDI), isophorone diisocyanate (IPDI), hydrogenated XDI (H6XDI), hydrogenated MDI (H12MDI), tolylene diisocyanate (TDI), diphenylmethane diisocyanate (MDI) and naphthalene diisocyanate (NDI). Examples of the isocyanate-based compound also include polyfunctional isocyanate-modified products of one or more of these diisocyanates. It is also possible to use a multimer (e.g., a trimer) as the polyisocyanate compound. Examples of the multimer include adducts, biurets, and nurates. Since the adhesive agent layer 2 is formed of a polyurethane adhesive agent, excellent electrolytic solution resistance is imparted to the exterior material for electrical storage devices, so that peeling of the base material layer 1 is suppressed even if the electrolytic solution is deposited on the lateral surface.

Other components may be added to the adhesive agent layer 2 as long as bondability is not inhibited, and the adhesive agent layer 2 may contain a colorant, a thermoplastic elastomer, a tackifier, a filler, and the like. When the adhesive agent layer 2 contains a colorant, the exterior material for electrical storage devices can be colored. As the colorant, known colorants such as pigments and dyes can be used. The colorants may be used alone, or may be used in combination of two or more thereof.

The type of pigment is not particularly limited as long as the bondability of the adhesive agent layer 2 is not impaired. Examples of the organic pigment include azo-based pigments, phthalocyanine-based pigments, quinacridone-based pigments, anthraquinone-based pigments, dioxazine-based pigments, indigothioindigo-based pigments, perinone-perylene-based pigments, isoindolenine-based pigments and benzimidazolone-based pigments. Examples of the inorganic pigment include carbon black-based pigments, titanium oxide-based pigments, cadmium-based pigments, lead-based pigments, chromium-based pigments and iron-based pigments, and also fine powder of mica (mica) and fish scale foil.

Of the colorants, carbon black is preferable for the purpose of, for example, blackening the appearance of the exterior material for electrical storage devices.

The average particle size of the pigment is not particularly limited, and is, for example, about 0.03 to 5 µm, preferably about 0.05 to 2 µm. The average particle size of the pigment is a median diameter measured by a laser diffraction/scattering particle size distribution measuring apparatus.

The content of the colorant in the adhesive agent layer 2 is not particularly limited as long as the exterior material for electrical storage devices is colored, and the content is, for example, about 5 to 60 mass%, preferably 10 to 40 mass%.

The thickness of the adhesive agent layer 2 is not particularly limited as long as the base material layer 1 and the barrier layer 3 can be bonded to each other, and the thickness is, for example, about 1 µm or more, or about 2 µm or more. The thickness of the adhesive agent layer 2 is, for example, about 10 µm or less, or about 5 µm or less. The thickness of the adhesive agent layer 2 is preferably in the range of about 1 to 10 µm, about 1 to 5 µm, about 2 to 10 µm, or about 2 to 5 µm.

### [Colored layer]

The colored layer is a layer provided between the base material layer 1 and the barrier layer 3 if necessary (not shown). When the adhesive agent layer 2 is present, the colored layer may be provided between the base material layer 1 and the adhesive agent layer 2 or between the adhesive agent layer 2 and the barrier layer 3. The colored layer may be provided outside the base material layer 1. By providing the colored layer, the exterior material for electrical storage devices can be colored.

The colored layer can be formed by, for example, applying an ink containing a colorant to the surface of the base material layer 1, or the surface of the barrier layer 3. As the colorant, known colorants such as pigments and dyes can be used. The colorants may be used alone, or may be used in combination of two or more thereof.

Specific examples of the colorant contained in the colored layer include the same colorants as those exemplified in the section [Adhesive agent layer 2].

### [Barrier layer 3]

In the exterior material for electrical storage devices, the barrier layer 3 is a layer which suppresses at least ingress of moisture.

Examples of the barrier layer 3 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 3 include resin films provided with at least one of these deposited films and resin layers. A plurality of barrier layers 3 may be provided. Preferably, the barrier layer 3 contains a layer formed of a metal material. Specific examples of the metal material forming the barrier layer 3 include aluminum alloys, stainless steel, titanium steel and steel sheets. When the metal material is used as a metal foil, it is preferable that the metal material includes at least one of an aluminum alloy foil and a stainless steel foil.

In the barrier layer 3, the layer formed of the metal material described above may contain a metal recycled material. Examples of the metal recycled material include recycled materials of an aluminum alloy, stainless steel, titanium steel, or a steel plate. These recycled materials can be each obtained by a known method. The recycled material of the aluminum alloy can be obtained by, for example, a manufacture method described in International Publication No. WO 2022/092231. The barrier layer 3 may be formed only of a recycled material, or may be formed of a mixed material of a recycled material and a virgin material. The metal recycled material is a metal material obtained by, for example, collecting, isolating and purifying various products used in what is called a city, wastes from manufacture processes, and the like, so that the material can be reused. The virgin material from a metal material is a new metal material obtained by refining a metal natural resource (raw material), which is not a recycled material.

The aluminum alloy foil is more preferably a soft aluminum alloy foil formed of, for example, an annealed aluminum alloy from the viewpoint of improving the moldability of the exterior material for electrical storage devices, and is preferably an aluminum alloy foil containing iron from the viewpoint of further improving the moldability. In the aluminum alloy foil containing iron (100 mass%), the content of iron is preferably 0.1 to 9.0 mass%, more preferably 0.5 to 2.0 mass%. When the content of iron is 0.1 mass% or more, it is possible to obtain an exterior material for electrical storage devices which has more excellent moldability. When the content of iron is 9.0 mass% or less, it is possible to obtain an exterior material for electrical storage devices which is more excellent in flexibility. Examples of the soft aluminum alloy foil include aluminum alloy foils having a composition specified in JIS H4160:1994 A8021H-O, JIS H4160:1994 A8079H-O, JIS H4000:2014 A8021P-O, or JIS H4000:2014 A8079P-O. If necessary, silicon, magnesium, copper, manganese or the like may be added. Softening can be performed by annealing or the like.

Examples of the stainless steel foil include austenite-based stainless steel foils, ferritic stainless steel foils, austenitic/ferritic stainless steel foils, martensitic stainless steel foils and precipitation-hardened stainless steel foils. From the viewpoint of providing an exterior material for electrical storage devices which is further excellent in moldability, it is preferable that the stainless steel foil is formed of austenite-based stainless steel.

Specific examples of the austenite-based stainless steel foil include SUS 304 stainless steel, SUS 301 stainless steel and SUS 316L stainless steel, and of these, SUS 304 stainless steel is particularly preferable.

When the barrier layer 3 is a metal foil, the barrier layer 3 may perform a function as a barrier layer suppressing at least ingress of moisture, and has a thickness of, for example, about 9 to 200 µm. The thickness of the barrier layer 3 is preferably about 150 µm or less, more preferably about 100 µm or less, still more preferably about 90 µm or less, particularly preferably about 85 µm or less. The thickness of the barrier layer 3 is preferably about 40 µm or more, still more preferably about 50 µm or more, more preferably about 55 µm or more. The thickness of the barrier layer 3 is preferably in the range of about 40 to 150 µm, about 40 to 100 µm, about 40 to 90 µm, about 40 to 85 µm, about 50 to 150 µm, about 50 to 100 µm, about 50 to 90 µm, about 50 to 85 µm, about 55 to 150 µm, about 55 to 100 µm, about 55 to 90 µm, or about 55 to 85 µm. When the barrier layer 3 is formed of an aluminum alloy foil, the thickness thereof is particularly preferably in above-described range. From the viewpoint of imparting high moldability and high rigidity to the exterior material 10 for electrical storage devices, the thickness of the barrier layer 3 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 to 200 µm, about 35 to 85 µm, about 35 to 75 µm, about 35 to 70 µm, about 45 to 200 µm, about 45 to 85 µm, about 45 to 75 µm, about 45 to 70 µm, about 50 to 200 µm, about 50 to 85 µm, about 50 to 75 µm, about 50 to 70 µm, about 55 to 200 µm, about 55 to 85 µm, about 55 to 75 µm, or about 55 to 70 µm. When the exterior material 10 for electrical storage devices has high moldability, deep drawing molding can be facilitated to contribute to an increase in capacity of the electrical storage device. When the capacity of the electrical storage device is increased, the weight of the electrical storage device increases, but the enhancement of the rigidity of the exterior material 10 for electrical storage devices can contribute to high hermeticity of the electrical storage device. In particular, when the barrier layer 3 includes a stainless steel foil, the thickness of the stainless steel foil is preferably about 60 µm or less, more preferably about 50 µm or less, still more preferably about 40 µm or less, still more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 to 60 µm, about 10 to 50 µm, about 10 to 40 µm, about 10 to 30 µm, about 10 to 25 µm, about 15 to 60 µm, about 15 to 50 µm, about 15 to 40 µm, about 15 to 30 µm, or about 15 to 25 µm.

When the barrier layer 3 is a metal foil, it is preferable that a corrosion-resistant film is provided at least on a surface on a side opposite to the base material layer for preventing dissolution and corrosion. The barrier layer 3 may include a corrosion-resistant film on each of both surfaces. Here, the corrosion-resistant film refers to a thin film obtained by subjecting the surface of the barrier layer to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (e.g. acid resistance and alkali resistance) to the barrier layer. Specifically, the corrosion-resistant film means a film which improves the acid resistance of the barrier layer (acid-resistant film), a film which improves the alkali resistance of the barrier layer (alkali-resistant film), or the like. One of the treatments for forming the corrosion-resistant film may be performed, or two or more thereof may be performed in combination. Not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 3 is provided with the corrosion-resistant film, the barrier layer 3 is regarded as including the corrosion-resistant film.

The corrosion-resistant film exhibits the effects of preventing delamination between the barrier layer (e.g. an aluminum alloy foil) and the base material layer during molding of the exterior material for electrical storage devices; preventing dissolution and corrosion of the surface of the barrier layer, particularly dissolution and corrosion of aluminum oxide present on the surface of the barrier layer when the barrier layer is an aluminum alloy foil, by hydrogen fluoride generated by reaction of an electrolyte with moisture; improving the bondability (wettability) of the surface of the barrier layer; preventing delamination between the base material layer and the barrier layer during heat-sealing; and preventing delamination between the base material layer and the barrier layer during molding.

Various corrosion-resistant films formed by chemical conversion treatment are known, and examples thereof include mainly corrosion-resistant films containing at least one of a phosphate, a chromate, a fluoride, a triazine thiol compound, and a rare earth oxide. Examples of the chemical conversion treatment using a phosphate or a chromate include chromic acid chromate treatment, phosphoric acid chromate treatment, phosphoric acid-chromate treatment and chromate treatment, and examples of the chromium compound used in these treatments include chromium nitrate, chromium fluoride, chromium sulfate, chromium acetate, chromium oxalate, chromium biphosphate, acetylacetate chromate, chromium chloride and chromium potassium sulfate. Examples of the phosphorus compound used in these treatments include sodium phosphate, potassium phosphate, ammonium phosphate and polyphosphoric acid. Examples of the chromate treatment include etching chromate treatment, electrolytic chromate treatment and coating-type chromate treatment, and coating-type chromate treatment is preferable. This coating-type chromate treatment is treatment in which at least a surface of the barrier layer (e.g. an aluminum alloy foil) on the inner layer side is first degreased by a well-known treatment method such as an alkali immersion method, an electrolytic cleaning method, an acid cleaning method, an electrolytic acid cleaning method or an acid activation method, and a treatment solution containing a metal phosphate such as Cr (chromium) phosphate, Ti (titanium) phosphate, Zr (zirconium) phosphate or Zn (zinc) phosphate or a mixture of these metal salts as a main component, a treatment solution containing any of non-metal salts of phosphoric acid and a mixture of these non-metal salts as a main component, or a treatment solution formed of a mixture of any of these salts and a synthetic resin or the like is then applied to the degreased surface by a well-known coating method such as a roll coating method, a gravure printing method or an immersion method, and dried. As the treatment liquid, for example, various solvents such as water, an alcohol-based solvent, a hydrocarbon-based solvent, a ketone-based solvent, an ester-based solvent, and an ether-based solvent can be used, and water is preferable. Examples of the resin component used here include polymers such as phenol-based resins and acryl-based resins, and examples of the treatment include chromate treatment using an aminated phenol polymer having any of repeating units represented by the following general formulae (1) to (4). In the aminated phenol polymer, the repeating units represented by the following general formulae (1) to (4) may be contained alone, or may be contained in combination of two or more thereof. The acryl-based resin is preferably polyacrylic acid, an acrylic acid-methacrylic acid ester copolymer, an acrylic acid-maleic acid copolymer, an acrylic acid-styrene copolymer, or a derivative thereof such as a sodium salt, an ammonium salt or an amine salt thereof. In particular, a derivative of polyacrylic acid such as an ammonium salt, a sodium salt or an amine salt of polyacrylic acid is preferable. In the present disclosure, the polyacrylic acid means a polymer of acrylic acid. The acryl-based resin is also preferably a copolymer of acrylic acid and dicarboxylic acid or dicarboxylic anhydride, and is also preferably an ammonium salt, a sodium salt or an amine salt of a copolymer of acrylic acid and dicarboxylic acid or dicarboxylic anhydride. The acryl-based resins may be used alone, or may be used in combination of two or more thereof.

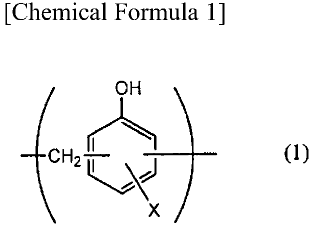

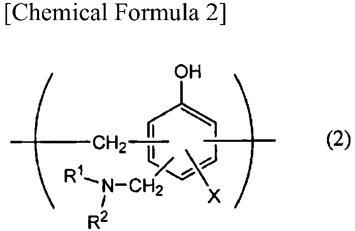

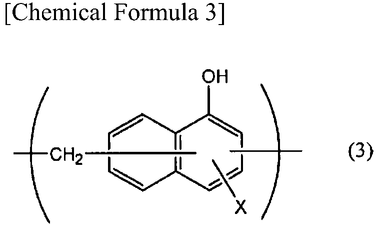

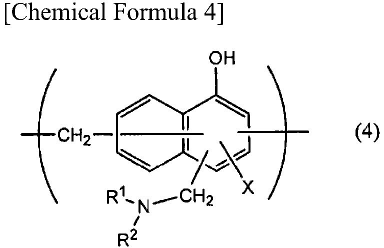

In the general formulae (1) to (4), X represents a hydrogen atom, a hydroxy group, an alkyl group, a hydroxyalkyl group, an allyl group, or a benzyl group. R¹ and R² are the same or different, and each represent a hydroxy group, an alkyl group or a hydroxyalkyl group. In the general formulae (1) to (4), examples of the alkyl group represented by X, R¹ and R² include linear or branched alkyl groups having 1 to 4 carbon atoms, such as a methyl group, an ethyl group, an n-propyl group, an isopropyl group, an n-butyl group, an isobutyl group and a tert-butyl group. Examples of the hydroxyalkyl group represented by X, R¹ and R² include linear or branched alkyl groups having 1 to 4 carbon atoms, which are substituted with one hydroxy group, such as a hydroxymethyl group, a 1-hydroxyethyl group, a 2-hydroxyethyl group, a 1-hydroxypropyl group, a 2-hydroxypropyl group, a 3-hydroxypropyl group, a 1-hydroxybutyl group, a 2-hydroxybutyl group, a 3-hydroxybutyl group and a 4-hydroxybutyl group. In the general formulae (1) to (4), the alkyl groups and the hydroxyalkyl groups represented by X, R¹, and R² may be identical or different. In the general formulae (1) to (4), X is preferably a hydrogen atom, a hydroxy group or a hydroxyalkyl group. A number average molecular weight of the aminated phenol polymer having repeating units represented by the general formulae (1) to (4) is preferably about 500 to 1000000, and more preferably about 1000 to 20000, for example. The aminated phenol polymer is manufactured by, for example, performing polycondensation of a phenol compound or a naphthol compound with formaldehyde to prepare a polymer including repeating units represented by the general formula (1) or the general formula (3), and then introducing a functional group (-CH₂NR¹R²) into the obtained polymer using formaldehyde and an amine (R¹R²NH). The aminated phenol polymers are used alone, or used in combination of two or more thereof.

Other examples of the corrosion-resistant film include thin films formed by corrosion prevention treatment of coating type in which a coating agent containing at least one selected from the group consisting of a rare earth element oxide sol, an anionic polymer and a cationic polymer is applied. The coating agent may further contain phosphoric acid or a phosphate, and a crosslinker for crosslinking the polymer. In the rare earth element oxide sol, fine particles of a rare earth element oxide (e.g. particles having an average particle size of 100 nm or less) are dispersed in a liquid dispersion medium. Examples of the rare earth element oxide include cerium oxide, yttrium oxide, neodymium oxide and lanthanum oxide, and cerium oxide is preferable from the viewpoint of further improving adhesion. The rare earth element oxides contained in the corrosion-resistant film can be used alone, or used in combination of two or more thereof. As the liquid dispersion medium for the rare earth element oxide, for example, various solvents such as water, an alcohol-based solvent, a hydrocarbon-based solvent, a ketone-based solvent, an ester-based solvent, and an ether-based solvent can be used, and water is preferable. For example, the cationic polymer is preferably polyethyleneimine, an ion polymer complex formed of a polymer having polyethyleneimine and a carboxylic acid, primary amine-grafted acrylic resins obtained by graft-polymerizing a primary amine with an acrylic main backbone, polyallylamine or a derivative thereof, or aminated phenol. The anionic polymer is preferably poly (meth)acrylic acid or a salt thereof, or a copolymer containing (meth)acrylic acid or a salt thereof as a main component. The crosslinker is preferably at least one selected from the group consisting of a silane coupling agent and a compound having any of functional groups including an isocyanate group, a glycidyl group, a carboxyl group and an oxazoline group. The phosphoric acid or phosphate is preferably condensed phosphoric acid or a condensed phosphate.

Examples of the corrosion-resistant film include films formed by applying a dispersion of fine particles of a metal oxide, such as aluminum oxide, titanium oxide, cerium oxide or tin oxide, or barium sulfate in phosphoric acid to the surface of the barrier layer and performing baking treatment at 150°C or higher.

The corrosion-resistant film may have a laminated structure in which at least one of a cationic polymer and an anionic polymer is further laminated if necessary. Examples of the cationic polymer and the anionic polymer include those described above.

The composition of the corrosion-resistant film can be analyzed by, for example, time-of-flight secondary ion mass spectrometry.

The amount of the corrosion-resistant film to be formed on the surface of the barrier layer 3 in the chemical conversion treatment is not particularly limited, but for example when the coating-type chromate treatment is performed, and it is desirable that the chromic acid compound is contained in an amount of, for example, about 0.5 to 50 mg, preferably about 1.0 to 40 mg, in terms of chromium, the phosphorus compound is contained in an amount of, for example, about 0.5 to 50 mg, preferably about 1.0 to 40 mg, in terms of phosphorus, and the aminated phenol polymer is contained in an amount of, for example, about 1.0 to 200 mg, preferably about 5.0 to 150 mg, per 1 m² of the surface of the barrier layer 3.

The thickness of the corrosion-resistant film is not particularly limited, and is preferably about 1 nm to 20 µm, more preferably about 1 nm to 100 nm, still more preferably about 1 nm to 50 nm from the viewpoint of the cohesive force of the film and the adhesive strength with the barrier layer and the heat-sealable resin layer. The thickness of the corrosion-resistant film can be measured by observation with a transmission electron microscope or a combination of observation with a transmission electron microscope and energy dispersive X-ray spectroscopy or electron beam energy loss spectroscopy. By analyzing the composition of the corrosion-resistant film using time-of-flight secondary ion mass spectrometry, peaks derived from secondary ions from, for example, Ce, P and O (e.g. at least one of Ce₂PO₄⁺, CePO₄⁻ and the like) and secondary ions from, for example, Cr, P and O (e.g. at least one of CrPO₂⁺, CrPO₄⁻ and the like) are detected.

The chemical conversion treatment is performed in the following manner: a solution containing a compound to be used for formation of a corrosion-resistant film is applied to the surface of the barrier layer by a bar coating method, a roll coating method, a gravure coating method, an immersion method or the like, and heating is then performed so that the temperature of the barrier layer is about 70 to about 200°C. The barrier layer may be subjected to a degreasing treatment by an alkali immersion method, an electrolytic cleaning method, an acid cleaning method, an electrolytic acid cleaning method or the like before the barrier layer is subjected to a chemical conversion treatment. When a degreasing treatment is performed as described above, the chemical conversion treatment of the surface of the barrier layer can be further efficiently performed. When an acid degreasing agent with a fluorine-containing compound dissolved in an inorganic acid is used for degreasing treatment, not only a metal foil degreasing effect can be obtained but also a metal fluoride can be formed as a passive state, and in this case, only degreasing treatment may be performed.

### [Heat-sealable resin layer 4]

In the exterior material for electrical storage devices according to the present disclosure, the heat-sealable resin layer 4 is a layer (sealant layer) which includes an innermost layer and performs a function of hermetically sealing the electrical storage device element by heat-sealing the heat-sealable resin layer during construction of the electrical storage device.

In the present disclosure, the heat-sealable resin contained in the heat-sealable resin layer 4 is not particularly limited as long as it is a resin having heat-sealability, and examples thereof include a thermoplastic resin as long as the effect of the invention of the present disclosure is not impaired. From the viewpoint of more suitably exhibiting the effect of the invention of the present disclosure, the heat-sealable resin layer 4 preferably contains polybutylene terephthalate, and more preferably contains at least one of homopolybutylene terephthalate and copolymer polybutylene terephthalate.

The heat-sealable resin layer 4 is preferably formed of, for example, a homopolybutylene terephthalate film, and the content ratio of the homopolybutylene terephthalate is preferably 80 mass% or more, more preferably 85 mass% or more, still more preferably 90 mass% or more.

When the heat-sealable resin layer 4 is a resin layer including a homopolybutylene terephthalate film, the resin contained in the heat-sealable resin layer 4 is substantially only homopolybutylene terephthalate (for example, homopolybutylene terephthalate accounts for 99 mass% or more, or 100 mass% or more of the resin). That is, the heat-sealable resin layer 4 in this case is formed of a homopolybutylene terephthalate film that is substantially free of a resin different from homopolybutylene terephthalate. For example, the heat-sealable resin layer 4 in this case is a layer including a homopolybutylene terephthalate film that is free of an elastomer and a resin different from copolymer polybutylene terephthalate.

The homopolybutylene terephthalate contained in the heat-sealable resin layer 4 may be, but is not required to be, acid-modified. When the homopolybutylene terephthalate is acid-modified homopolybutylene terephthalate, the homopolybutylene terephthalate can be acid-modified with an acid component such as maleic anhydride or acrylic acid.

The heat-sealable resin layer 4 formed of homopolybutylene terephthalate has, for example, a melting peak temperature of 220 to 230°C. Note that, in the present disclosure, the melting peak temperature of the resin forming a layer is an endothermic peak as measured by differential scanning calorimeter (DSC), and is specifically measured by the following method.

### <Measurement of melting peak temperature>

For the resin forming the layer, the melting peak temperature is measured in accordance with the provisions of JIS K7121:2012 (Testing Methods for Transition Temperatures of Plastics (Amendment 1 of JIS K7121:1987)). The measurement is performed using a differential scanning calorimeter. The measurement sample is held at -50°C for 15 minutes, then heated from -50°C to 300°C at a temperature rise rate of 10°C/min to measure the first melting peak temperature P (°C), and then held at 300°C for 2 minutes. Next, the measurement sample is cooled from 300°C to -50°C at a temperature lowering rate of 10°C/min, and held for 15 minutes. Further, the second melting peak temperature Q (°C) is measured by heating the measurement sample from -50°C to 300°C at a temperature rise rate of 10°C/min. The flow rate of the nitrogen gas is set to 50 ml/min. In accordance with the above procedure, the first measured melting peak temperature P (°C) and the second measured melting peak temperature Q (°C) are determined, and the first measured melting peak temperature P is adopted as a melting peak temperature.

The heat-sealable resin layer 4 is also preferably a layer containing copolymer polybutylene terephthalate. When the heat-sealable resin layer 4 is formed of copolymer polybutylene terephthalate, the content ratio of the copolymer polybutylene terephthalate contained in the heat-sealable resin layer 4 is preferably 3 mass% or more, more preferably 5 mass% or more, still more preferably 10 mass% or more.

When the heat-sealable resin layer 4 is a resin layer including a copolymer polybutylene terephthalate film, the resin contained in the heat-sealable resin layer 4 is substantially only copolymer polybutylene terephthalate (for example, copolymer polybutylene terephthalate accounts for 99 mass% or more, or 100 mass% or more of the resin). That is, the heat-sealable resin layer 4 in this case is formed of a copolymer polybutylene terephthalate film that is substantially free of a resin different from copolymer polybutylene terephthalate. For example, the heat-sealable resin layer 4 in this case is a layer including a copolymer polybutylene terephthalate film that is free of an elastomer and a resin different from copolymer polybutylene terephthalate.

From the viewpoint of more suitably exhibiting the effect of the invention of the present disclosure, the melting peak temperature of the heat-sealable resin layer 4 containing copolymer polybutylene terephthalate is preferably 170°C or higher, more preferably 190°C or higher, still more preferably 200°C or higher, and preferably 350°C or lower, more preferably 300°C or lower, still more preferably 270°C or lower, still more preferably 230°C or lower, still more preferably 217°C or lower, and is preferably in the range of about 170 to 350°C, about 170 to 300°C, about 170 to 270°C, about 170 to 230°C, about 170 to 217°C, about 190 to 350°C, about 190 to 300°C, about 190 to 270°C, about 190 to 230°C, about 190 to 217°C, about 200 to 350°C, about 200 to 300°C, about 200 to 270°C, about 200 to 230°C, about 200 to 217°C, or the like. The method for measuring the melting peak temperature is as described above.

In the present disclosure, the copolymer polybutylene terephthalate contained in the heat-sealable resin layer 4 preferably further includes at least one selected from the group consisting of a polyether structure and a polyester structure B in addition to a polybutylene terephthalate structure. Here, the polyester structure B is a structure different from the polybutylene terephthalate structure.

The polyether structure can be introduced into a resin by carrying out a polycondensation reaction of a polyvalent carboxylic acid of the polybutylene terephthalate structure (for example, terephthalic acid) and a compound having a polyether structure (monomer). It is desirable that the polyether structure forms a soft segment of a resin in the heat-sealable resin layer 4. Examples of the compound (monomer) that forms such a soft segment by undergoing a polycondensation reaction with a polyvalent carboxylic acid of the polybutylene terephthalate structure (that is, terephthalic acid) include diols capable of exhibiting elasticity, such as polytetramethylene ether glycol and neopentyl glycol. The polyether structure is preferably a polyether structure derived from at least one selected from the group consisting of polytetramethylene ether glycol and neopentyl glycol. Polytetramethylene ether glycol, neopentyl glycol and the like form constituent units in the polyether structure of the resin. When a polyether structure is introduced into a resin as a soft segment, the rubber elasticity of the resin is enhanced, and thus the resin is hardly broken, so that high sealing strength is suitably exhibited in a low-temperature environment.

The polyester structure B can be introduced into a resin by using a compound (monomer) that forms a polyester structure by undergoing a polycondensation reaction with a butanediol used in the polybutylene terephthalate structure. It is desirable that the polyester structure B forms a soft segment of a resin in the heat-sealable resin layer 4, and examples of the compound (monomer) that forms such a soft segment by undergoing a polycondensation reaction with a butanediol of the polybutylene terephthalate structure include dicarboxylic acids such as aromatic dicarboxylic acids such as phthalic acid, terephthalic acid, isophthalic acid and naphthalenedicarboxylic acid, and aliphatic dicarboxylic acids such as aliphatic dicarboxylic acids such as adipic acid, sebacic acid, dodecanedioic acid and cyclohexanedicarboxylic acid (preferably aliphatic dicarboxylic acids having 4 to 20 carbon atoms). An aromatic dicarboxylic acid, an aliphatic dicarboxylic acid, or the like forms a constituent unit in the polyester structure B of the resin. The polyester structure B is particularly preferably a polyester structure obtained by polycondensation of a polyol and at least one dicarboxylic acid selected from the group consisting of isophthalic acid, sebacic acid and dodecanedioic acid. When the polyester structure B is introduced into a resin as a soft segment, the rubber elasticity of the resin is enhanced, and thus the resin is hardly broken, so that high sealing strength is suitably exhibited in environments in a low-temperature environment.

From the viewpoint of more suitably exhibiting the effect of the invention of the present disclosure, it is particularly preferable that the resin forming the heat-sealable resin layer 4 contains a polyether structure in addition to the polybutylene terephthalate structure, and the polyether structure has a polycondensation structure of at least one of polytetramethylene ether glycol and neopentyl glycol and terephthalic acid of the polybutylene terephthalate structure. It is particularly preferable that the resin forming the heat-sealable resin layer 4 contains the polyester structure B in addition to the polybutylene terephthalate structure, and the polyester structure B has a polycondensation structure of at least one selected from the group consisting of isophthalic acid, dodecanedioic acid and sebacic acid and 1,4-butanediol of the polybutylene terephthalate structure.

From the viewpoint of more suitably exhibiting the effect of the invention of the present disclosure, it is preferable that the copolymer polybutylene terephthalate forming the heat-sealable resin layer 4 contains the polybutylene terephthalate structure as a main component. The main component means that the proportion of the component is 50 mass% or more, preferably 60 mass% or more, more preferably 70 mass% or more, still more preferably 80 mass% or more when the proportion of all components forming the resin is 100 mass%. In the resin forming the heat-sealable resin layer 4, the proportion of at least one of the polyether structure and the dicarboxylic acid structure is preferably about 2 to 30 mass%, more preferably about 3 to 25 mass%, still more preferably about 3 to 20 mass% when the proportion of all components (all monomer units) forming the resin is 100 mass%.

The heat-sealable resin layer 4 may be a layer containing at least one of homopolybutylene terephthalate and copolymer polybutylene terephthalate, or may be a layer not containing homopolybutylene terephthalate and copolymer polybutylene terephthalate. The resin different from polybutylene terephthalate is not particularly limited as long as the effect of the present disclosure is not impaired, and examples thereof include thermoplastic resins superior in heat resistance to polypropylene such as polyethylene terephthalate and ETFE.

The heat-sealable resin layer 4 may contain a resin containing a polyolefin backbone as a main component, may contain polyolefin as a main component, and also preferably contains polypropylene as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the heat-sealable resin layer 4. For example, the phrase "the heat-sealable resin layer 4 contains polypropylene as a main component" means that the content ratio of polypropylene is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the heat-sealable resin layer 4.

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. Of these, polypropylene is preferable. The polyolefin resin in the case of a copolymer may be a block copolymer or a random copolymer. These polyolefin-based resins may be used alone, or may be used in combination of two or more thereof.

The polyolefin may be a cyclic polyolefin. The cyclic polyolefin is a copolymer of an olefin and a cyclic monomer, and examples of the olefin as a constituent monomer of the cyclic polyolefin include ethylene, propylene, 4-methyl-1-pentene, styrene, butadiene and isoprene. Examples of the cyclic monomer as a constituent monomer of the cyclic polyolefin include cyclic alkenes such as norbornene; cyclic dienes such as cyclopentadiene, dicyclopentadiene, cyclohexadiene and norbornadiene. Among these polyolefins, cyclic alkenes are preferable, and norbornene is still more preferable.

The polyolefin may be an acid-modified polyolefin. The acid-modified polyolefin is a polymer with the polyolefin modified by subjecting the polyolefin to block polymerization or graft polymerization with an acid component. As the polyolefin to be acid-modified, the above-mentioned polyolefins, copolymers obtained by copolymerizing polar molecules such as acrylic acid or methacrylic acid with the above-mentioned polyolefins, polymers such as crosslinked polyolefins, or the like can also be used. Examples of the acid component to be used for acid modification include carboxylic acids such as maleic acid, acrylic acid, itaconic acid, crotonic acid, maleic anhydride and itaconic anhydride, and anhydrides thereof.

The acid-modified polyolefin may be an acid-modified cyclic polyolefin. The acid-modified cyclic polyolefin is a polymer obtained by copolymerizing a part of monomers forming the cyclic polyolefin in place of an acid component, or block-polymerizing or graft-polymerizing an acid component with the cyclic polyolefin. The cyclic polyolefin to be modified with an acid is the same as described above. The acid component to be used for acid modification is the same as the acid component used for modification of the polyolefin.

Examples of preferred acid-modified polyolefins include polyolefins modified with a carboxylic acid or an anhydride thereof, polypropylene modified with a carboxylic acid or an anhydride thereof, maleic anhydride-modified polyolefins, and maleic anhydride-modified polypropylene.

The heat-sealable resin layer 4 may be formed from one resin alone, or may be formed from a blend polymer obtained by combining two or more resins. Further, the heat-sealable resin layer 4 may be composed of only one layer, or may be composed of two or more layers with the same resin or different resins.

The heat-sealable resin layer 4 may contain a slipping agent etc. if necessary. When the heat-sealable resin layer 4 contains a slipping agent, the moldability of the exterior material for electrical storage devices can be improved. The slipping agent is not particularly limited, and a known slipping agent can be used.

The slipping agent is not particularly limited, and is preferably an amide-based slipping agent. Specific examples of the slipping agent include those exemplified for the base material layer 1. The slipping agents may be used alone, or may be used in combination of two or more thereof, and are preferably used in combination of two or more thereof.

In the present disclosure, it is preferable that a slipping agent is present on the surface of the heat-sealable resin layer 4 and/or inside the heat-sealable resin layer 4 from the viewpoint of enhancing the moldability of the exterior material for electrical storage devices. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylol amide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylene bisbehenamide, hexamethylenehydroxystearic acid amide, N,N'-distearyl adipic acid amide and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyl adipic acid amide and N,N'-dioleylsebacic acid amide. Specific examples of the fatty acid ester amide include stearamide ethyl stearate. Specific examples of the aromatic bisamide include m-xylylenebisstearic acid amide, m-xylylenebishydroxystearic acid amide and N,N'-distearyl isophthalic acid amide. The slipping agents may be used alone, or may be used in combination of two or more thereof, and are preferably used in combination of two or more thereof.

When the slipping agent is present on the surface of the heat-sealable resin layer 4, the amount of the slipping agent present is not particularly limited. From the viewpoint of improving the moldability of the exterior material for electrical storage devices, the amount of the slipping agent present is preferably about 1 mg/m² or more, more preferably about 3 mg/m² or more, still more preferably about 5 mg/m² or more, still more preferably about 10 mg/m² or more, still more preferably about 15 mg/m² or more, and preferably about 50 mg/m² or less, more preferably about 40 mg/m² or less, and is preferably in the range of 1 to 50 mg/m², about 1 to 40 mg/m², about 3 to 50 mg/m², about 3 to 40 mg/m², about 5 to 50 mg/m², about 5 to 40 mg/m², about 10 to 50 mg/m², about 10 to 40 mg/m², about 15 to 50 mg/m², or about 15 to 40 mg/m².

When the slipping agent is present inside the heat-sealable resin layer 4, the amount of the slipping agent present is not particularly limited. From the viewpoint of improving the moldability of the exterior material for electrical storage devices, the amount of the slipping agent present is preferably about 100 ppm or more, more preferably about 300 ppm or more, still more preferably about 500 ppm or more, and preferably about 3000 ppm or less, more preferably about 2000 ppm or less, and is preferably in the range of about 100 to 3000 ppm, about 100 to 2000 ppm, about 300 to 3000 ppm, about 300 to 2000 ppm, about 500 to 3000 ppm, or about 500 to 2000 ppm. When two or more slipping agents are present inside the heat-sealable resin layer 4, the above-described slipping agent amount is the total amount of the slipping agents. When two or more types of slipping agents are present inside the heat-sealable resin layer 4, the amount of the first type of slipping agent present is not particularly limited. From the viewpoint of improving the moldability of the exterior material for electrical storage devices, the amount of the first type of slipping agent present is preferably about 100 ppm or more, more preferably about 300 ppm or more, still more preferably about 500 ppm or more, and preferably about 3000 ppm or less, more preferably about 2000 ppm or less, and is preferably in the range of about 100 to 3000 ppm, about 100 to 2000 ppm, about 300 to 3000 ppm, about 300 to 2000 ppm, about 500 to 3000 ppm, or about 500 to 2000 ppm. The amount of the second type of slipping agent present is not particularly limited. From the viewpoint of improving the moldability of the exterior material for electrical storage devices, the amount of the second type of slipping agent present is preferably about 50 ppm or more, more preferably about 100 ppm or more, still more preferably about 200 ppm or more, and preferably about 1500 ppm or less, more preferably about 1000 ppm or less, and is preferably in the range of about 50 to 1500 ppm, about 50 to 1000 ppm, about 100 to 1500 ppm, about 100 to 1000 ppm, about 200 to 1500 ppm, or about 200 to 1000 ppm.

The slipping agent present on the surface of the heat-sealable resin layer 4 may be one obtained by exuding the slipping agent contained in the resin forming the heat-sealable resin layer 4, or one obtained by applying a slipping agent to the surface of the heat-sealable resin layer 4.

The thickness of the heat-sealable resin layer 4 is not particularly limited as long as the heat-sealable resin layers are heat-sealed to exhibit a function of sealing the electrical storage device element, but from the viewpoint of more suitably exhibiting the effect of the present disclosure, the thickness is preferably about 15 µm or more, more preferably about 20 µm or more, still more preferably about 30 µm or more, and preferably about 80 µm or less, more preferably about 70 µm or less, still more preferably about 60 µm or less, and is preferably in the range of about 15 to 80 µm, about 15 to 70 µm, about 15 to 60 µm, about 20 to 80 µm, about 20 to 70 µm, about 20 to 60 µm, about 30 to 80 µm, about 30 to 70 µm, or about 30 to 60 µm.

### (Method for manufacturing heat-sealable resin layer 4)

The method for manufacturing the heat-sealable resin layer 4 is not particularly limited as long as the heat-sealable resin layer 4 of the present disclosure is obtained, and a known or conventional film formation method and lamination method may be applied. The film can be manufactured by, for example, a known film formation method and/or lamination method such as an extrusion method, a co-extrusion method, a cast molding method, a T-die method, a cutting method or an inflation method. For example, a film for forming the heat-sealable resin layer 4, which is produced in advance, may be laminated with an adhesive agent layer interposed therebetween, a molten resin composition may be laminated by an extrusion or co-extrusion method on a layer formed in advance, a plurality of layers may be laminated by melting and press-bonding while being produced in parallel, or one or more resins may be applied onto another layer, and dried to perform coating.

For the heat-sealable resin layer 4, layers to be incorporated in the heat-sealable resin layer 4 can be laminated by extrusion or co-extrusion in an extrusion coating method, or laminated with an adhesive layer by an inflation method or a casting method after film formation. Even in the case of an extrusion coating method, the layer may be laminated with an adhesive layer if necessary. Alternatively, a film for a water absorbing layer (or a sulfur-based gas absorbing layer), which is formed in advance, may be laminated and bonded with an adhesive layer laminated by an extrusion coating method, a dry lamination method, a non-solvent lamination method or the like. Subsequently, aging treatment may be performed if necessary.

For example, when a film or the like is laminated by an extrusion coating method, first, a resin for forming the film is heated and melted, expanded and stretched in a necessary width direction by a T-die, and (co-)extruded into a curtain shape, and the molten resin is caused to flow down to a lamination surface, and sandwiched between a rubber roll and a cooled metal roll. In this way, the layer can be formed and laminated and bonded to the lamination surface in parallel. The melt mass flow rate (MFR) of each resin component in the case of lamination performed by an extrusion coating method is preferably 0.2 to 50 g/10 min, more preferably 0.5 to 30 g/10 min. If MFR is below or above the above-described range, processability is likely to be compromised. In the present specification, MFR is a value measured by a method conforming to JIS K7210.

The melt mass flow rate (MFR) of the resin component in the case of use of an inflation method is preferably 0.2 to 10 g/10 min, more preferably 0.2 to 9.5 g/10 min. If MFR is below or above the above-described range, processability is likely to be compromised.

If necessary, desired surface treatment can be applied to the surface of the heat-sealable resin layer 4 in advance for improving bondability. For example, a corona treatment layer, an ozone treatment layer, a plasma treatment layer, an oxidation treatment layer, and the like can be formed and provided by performing any of pretreatments such as corona discharge treatment, ozone treatment, low-temperature plasma treatment using oxygen gas, nitrogen gas or the like, glow discharge treatment, and oxidation treatment using a chemical or the like. Alternatively, any of various coating agent layers such as a primer coating agent layer, an undercoat agent layer, an anchor coating agent layer, an adhesive agent layer and a vapor deposition anchor coating agent layer may be formed on the surface as a surface treatment layer. For the various coating agent layers described above, for example, a resin composition containing a polyester-based resin, a polyamide-based resin, a polyurethane-based resin, an epoxy-based resin, a phenol-based resin, a (meth)acryl-based resin, a polyvinyl acetate-based resin, a polyolefin-based resin such as polyethylene or polypropylene or a copolymer or a modified resin thereof, a cellulose-based resin or the like as a vehicle main component can be used.

Each layer to be incorporated in the heat-sealable resin layer 4 can be further uniaxially stretched or biaxially stretched by a heretofore known method using a tenter method, a tubular method or the like if necessary.

### [Adhesive layer 5]

In the exterior material for electrical storage devices according to the present disclosure, the adhesive layer 5 is a layer provided between the barrier layer 3 (or corrosion-resistant film) and the heat-sealable resin layer 4 if necessary for firmly bonding these layers to each other.

The adhesive layer 5 is formed from a resin capable of bonding the barrier layer 3 and the heat-sealable resin layer 4 to each other. The resin to be used for forming the adhesive layer 5 is, for example, the same as that of the adhesive agent exemplified for the adhesive agent layer 2.

From the viewpoint of firmly bonding the adhesive layer 5 to the heat-sealable resin layer 4, it is preferable that the resin to be used for forming the adhesive layer 5 contains a polyolefin backbone. Examples thereof include the polyolefins, acid-modified polyolefins, cyclic polyolefins and acid-modified cyclic polyolefins exemplified for the heat-sealable resin layer 4 described above. On the other hand, from the viewpoint of firmly bonding the barrier layer 3 and the adhesive layer 5 to each other, it is preferable that the adhesive layer 5 contains an acid-modified polyolefin. Examples of the acid modifying component include dicarboxylic acids such as maleic acid, itaconic acid, succinic acid and adipic acid, anhydrides thereof, acrylic acid, and methacrylic acid, and maleic anhydride is most preferable from the viewpoint of ease of modification, general-purpose property, and the like. From the viewpoint of the heat resistance of the exterior material for electrical storage devices, the olefin component is preferably a polypropylene-based resin, and it is most preferable that the adhesive layer 5 contains maleic anhydride-modified polypropylene.

When a resin used for formation of the adhesive layer 5 contains a polyolefin backbone, the adhesive layer 5 preferably contains a resin containing a polyolefin backbone as a main component, more preferably contains acid-modified polyolefin as a main component, still more preferably contains acid-modified polypropylene as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the adhesive layer 5. For example, the phrase "the adhesive layer 5 contains acid-modified polypropylene as a main component" means that the content ratio of acid-modified polypropylene is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the adhesive layer 5.

The resin forming the adhesive layer 5 can be confirmed to contain a polyolefin backbone by an analysis method such as infrared spectroscopy, gas chromatography-mass spectrometry, and the analysis method is not particularly limited. The resin forming the adhesive layer 5 is confirmed to contain an acid-modified polyolefin, for example, when peaks derived from maleic anhydride are detected near wavenumbers of 1760 cm⁻¹ and 1780 cm⁻¹ when a maleic anhydride-modified polyolefin is measured by infrared spectroscopy. However, if the degree of acid modification is low, the peaks may be too small to be detected. In that case, the peaks can be analyzed by nuclear magnetic resonance spectroscopy.

Further, from the viewpoint of securing durability, such as heat resistance and content resistance and securing moldability, of the exterior material for electrical storage devices while reducing the thickness, the adhesive layer 5 is more preferably a cured product of a resin composition containing an acid-modified polyolefin and a curing agent. Preferred examples of the acid-modified polyolefin include those described above.

The adhesive layer 5 is preferably a cured product of a resin composition containing an acid-modified polyolefin and at least one selected from the group consisting of a compound having an isocyanate group, a compound having an oxazoline group, and a compound having an epoxy group, particularly preferably a cured product of a resin composition containing an acid-modified polyolefin and at least one selected from the group consisting of a compound having an isocyanate group and a compound having an epoxy group. Preferably, the adhesive layer 5 preferably contains at least one selected from the group consisting of polyurethane, polyester and epoxy resin. More preferably, the adhesive layer 5 contains polyurethane and epoxy resin. As the polyester, for example, an ester resin produced by reaction of an epoxy group with a maleic anhydride group, or an amide ester resin produced by reaction of an oxazoline group with a maleic anhydride group is preferable. When an unreacted substance of a curing agent, such as a compound having an isocyanate group, a compound having an oxazoline group, or an epoxy resin remains in the adhesive layer 5, the presence of the unreacted substance can be confirmed by, for example, a method selected from infrared spectroscopy, Raman spectroscopy, time-of-flight secondary ion mass spectrometry (TOF-SIMS) and the like.

From the viewpoint of further improving adhesion between the barrier layer 3 and the adhesive layer 5, the adhesive layer 5 is preferably a cured product of a resin composition containing a curing agent having at least one selected from the group consisting of an oxygen atom, a heterocyclic ring, a C=N bond, and a C-O-C bond. Examples of the curing agent having a heterocyclic ring include curing agents having an oxazoline group, and curing agents having an epoxy group. Examples of the curing agent having a C=N bond include curing agents having an oxazoline group and curing agents having an isocyanate group. Examples of the curing agent having a C-O-C bond include curing agents having an oxazoline group, curing agents having an epoxy group. Whether the adhesive layer 5 is a cured product of a resin composition containing any of these curing agents can be confirmed by, for example, a method such as gas chromatography-mass spectrometry (GCMS), infrared spectroscopy (IR), time-of-flight secondary ion mass spectrometry (TOF-SIMS), or X-ray photoelectron spectroscopy (XPS).

The compound having an isocyanate group is not particularly limited, and is preferably a polyfunctional isocyanate compound from the viewpoint of effectively improving adhesion between the barrier layer 3 and the adhesive layer 5. The polyfunctional isocyanate compound is not particularly limited as long as it is a compound having two or more isocyanate groups. Specific examples of the polyfunctional isocyanate-based curing agent include pentane diisocyanate (PDI), isophorone diisocyanate (IPDI), hexamethylene diisocyanate (HDI), tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms.

The content of the compound having an isocyanate group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The compound having an oxazoline group is not particularly limited as long as it is a compound having an oxazoline backbone. Specific examples of the compound having an oxazoline group include compounds having a polystyrene main chain and compounds having an acrylic main chain. Examples of the commercially available product include EPOCROS series manufactured by Nippon Shokubai Co., Ltd.

The proportion of the compound having an oxazoline group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

Examples of the compound having an epoxy group include epoxy resins. The epoxy resin is not particularly limited as long as it is a resin capable of forming a crosslinked structure by epoxy groups existing in the molecule, and a known epoxy resin can be used. The weight average molecular weight of the epoxy resin is preferably about 50 to 2000, more preferably about 100 to 1000, still more preferably about 200 to 800. In the present disclosure, the weight average molecular weight of the epoxy resin is a value obtained by performing measurement by gel permeation chromatography (GPC) under the condition of using polystyrene as a standard sample.

Specific examples of the epoxy resin include glycidyl ether derivatives of trimethylolpropane, bisphenol A diglycidyl ether, modified bisphenol A diglycidyl ether, bisphenol F-type glycidyl ether, novolak glycidyl ether, glycerin polyglycidyl ether and polyglycerin polyglycidyl ether. The epoxy resins may be used alone, or may be used in combination of two or more thereof.

The proportion of the epoxy resin in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The polyurethane is not particularly limited, and a known polyurethane can be used. The adhesive layer 5 may be, for example, a cured product of two-liquid curable polyurethane.

The proportion of the polyurethane in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5 in an atmosphere including a component which induces corrosion of the barrier layer, such as an electrolytic solution.

When the adhesive layer 5 is a cured product of a resin composition containing at least one selected from the group consisting of a compound having an isocyanate group, a compound having an oxazoline group and an epoxy resin, and the acid-modified polyolefin, the acid-modified polyolefin functions as a main component, and the compound having an isocyanate group, the compound having an oxazoline group, and the compound having an epoxy group each function as a curing agent.

The adhesive layer 5 may contain a modifier having a carbodiimide group.

In manufacturing of the exterior material 10 for electrical storage devices according to the present disclosure by laminating the adhesive layer 5 with the barrier layer 3, the heat-sealable resin layer 4 or the like, a resin film formed in advance may be used as the adhesive layer 5. A heat-sealable resin for forming the adhesive layer 5 may be formed into a film on the surface of the barrier layer 3, the heat-sealable resin layer 4 or the like by extrusion molding, coating or the like to obtain the adhesive layer 5 formed of a resin film.

The thickness of the adhesive layer 5 is preferably about 50 µm or less, about 40 µm or less, about 30 µm or less, about 20 µm or less, or about 5 µm or less. The thickness of the adhesive layer 5 is preferably about 0.1 µm or more, or about 0.5 µm or more. The thickness of the adhesive layer 5 is preferably in the range of about 0.1 to 50 µm, about 0.1 to 40 µm, about 0.1 to 30 µm, about 0.1 to 20 µm, about 0.1 to 5 µm, about 0.5 to 50 µm, about 0.5 to 40 µm, about 0.5 to 30 µm, about 0.5 to 20 µm, or about 0.5 to 5 µm. More specifically, the thickness is preferably about 1 to 10 µm, more preferably about 1 to 5 µm in the case of the adhesive agent exemplified for the adhesive agent layer 2 or a cured product of an acid-modified polyolefin with a curing agent. When any of the resins exemplified for the heat-sealable resin layer 4 is used, the thickness of the adhesive layer is preferably about 2 to 50 µm, more preferably about 10 to 40 µm. When the adhesive layer 5 is a cured product of a resin composition containing the adhesive agent exemplified for the adhesive agent layer 2 or an acid-modified polyolefin and a curing agent, the adhesive layer 5 can be formed by, for example, applying the resin composition and curing the resin composition by heating or the like. When the resin exemplified for the heat-sealable resin layer 4 is used, for example, extrusion molding of the heat-sealable resin layer 4 and the adhesive layer 5 can be performed.

In the exterior material for electrical storage devices of the present disclosure, the layer on the inner side with respect to the barrier layer 3 (at least one layer of the heat-sealable resin layer 4, the adhesive layer 5 provided as necessary, and the like) may contain at least one of a water absorbent and a sulfur-based gas absorbent. In the present disclosure, a layer containing a water-absorbent material is sometimes referred to as a "water absorbing layer". In the present disclosure, a layer containing a sulfur-based gas absorbent is sometimes referred to as a "sulfur-based gas absorbing layer". When a water absorbent and a sulfur-based gas absorbent are contained in a layer on the inner side with respect to the barrier layer 3, the water absorbent and the sulfur-based gas absorbent may be contained in the same layer or may be contained in different layers. When the layer on the inner side with respect to the barrier layer 3 has two or more layers, it is preferable that the sulfur-based gas absorbent is contained in a layer free of a water absorbent and forms a sulfur-based gas absorbing layer.

The moisture to be absorbed by the water absorbent is moisture from gas and/or liquid. The moisture to be absorbed generates various kinds of outgas when absorbed by, for example, a solid electrolyte-type lithium ion battery. Examples of the sulfur-based gas to be absorbed by the sulfur-based gas absorbent include hydrogen sulfide, dimethyl sulfide, methyl mercaptan, and sulfur oxide represented by SOx. The sulfur-based gas is a component of the outgas (generated, for example, when the electrical storage device is an all-solid-state battery using a sulfide-based inorganic solid electrolyte, or when the electrical storage device is a lithium secondary battery using lithium sulfur for a positive electrode).

The water absorbent contained in the water absorbing layer is not particularly limited as long as it exhibits a water absorbing property in a state of being dispersed in the resin. For example, from the viewpoint of temporal stability in the electrical storage device, an inorganic water absorbent can be suitably used. Specific examples of the preferred inorganic water absorbent include calcium oxide, anhydrous magnesium sulfate, magnesium oxide, calcium chloride, zeolite, aluminum oxide, silica gel, alumina gel, and calcined alum. Among inorganic water absorbents, in general, inorganic chemical water absorbents have a higher water absorption effect than inorganic physical water absorbents, can reduce the content, and allow a sufficient water-absorbing property and a heat-sealing property to be easily achieved in a single layer. Among the inorganic chemical water absorbents, calcium oxide, anhydrous magnesium sulfate, and magnesium oxide are particularly preferable because they hardly re-release moisture, have high temporal stability in a low-humidity state in the packaging, and have a bone-dry effect. The bone-dry effect means an effect of absorbing water to a relative humidity of about 0%, and the humidity control effect means an effect of maintaining a constant humidity by absorbing water at a high humidity and releasing moisture at a low humidity.

The content ratio of the resin contained in the water absorbing layer is, for example, 50 mass% or more, preferably 55 mass% or more, still more preferably 60 mass% or more.

The content of the water absorbent contained in the water absorbing layer is not particularly limited as long as the effect of the present disclosure is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the water absorbing layer. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass.

It is preferable that the sulfur-based gas absorbent contains a physical sulfur-based gas absorbent and/or a chemical sulfur-based gas absorbent. By using various kinds of sulfur-based gas absorbents in combination, for example, using a physical sulfur-based gas absorbent and a chemical sulfur-based gas absorbent in combination, many kinds of sulfur-based gases can be easily absorbed. The sulfur-based gas absorbent is used in the form of, for example, powder. The maximum particle size of the sulfur-based gas absorbent is preferably 20 µm or less, and the number average particle size of the powder is preferably 0.1 µm or more, 1.0 µm or more or the like, and preferably 15 µm or less, 10 µm or less, 8 µm or less or the like. The number average particle size of the powder is preferably in the range of about 0.1 to 15 µm, about 0.1 to 10 µm, about 0.1 to 8 µm, about 1 to 15 µm, about 1 to 10 µm, or about 1 to 8 µm. If the number average particle size is below the above-described range, the sulfur-based gas absorbent is likely to aggregate, and if the number average particle size is above the above-described range, the sulfur-based gas absorbing film may be poor in homogeneity, and the surface area of the sulfur-based gas absorbent may decrease, resulting in poor sulfur-based gas absorption.

### (Physical sulfur-based gas absorbent)

The physical sulfur-based gas absorbent is a gas absorbent having an action of physically absorbing a sulfur-based gas to be absorbed. It is preferable that the physical sulfur-based gas absorbent contains one or more selected from the group consisting of hydrophobic zeolite, bentonite and sepiolite in which the molar ratio of SiO₂ to Al₂O₃ is 1/1 to 2000/1.

The hydrophobic zeolite is excellent in absorbency of molecules having low polarity, such as a sulfur-based gas, and has a porous structure. In general, zeolite becomes more hydrophobic as the molar ratio of SiO₂ to Al₂O₃ increases, where SiO₂ and Al₂O₃ are constituent components of zeolite. More hydrophobic zeolite more easily absorbs molecules having low polarity, such as a sulfur-based gas, but has less affinity for molecules having high polarity, such as water, and hardly absorbs these molecules. The molar ratio of SiO₂ to Al₂O₃ of the hydrophobic zeolite is preferably 30/1 to 10000/1, more preferably 35/1 to 9000/1, still more preferably 40/1 to 8500/1. Hydrophobic zeolite has high heat resistance, and thus can maintain an absorption effect even when exposed to a high temperature of 230°C or higher. In the present invention, hydrophobic zeolite having a molar ratio in the above-described range is preferably used from the viewpoint of the balance between the sulfur-based gas absorption capacity and availability.

Bentonite is an inorganic substance that contains montmorillonite, which is a clay mineral, as a main component, a large amount of layered aluminum phyllosilicate, and minerals such as quartz and feldspar as impurities. Examples of the bentonite include Na-type bentonite containing a large amount of Na⁺ ions, Ca-type bentonite containing a large amount of Ca²⁺ ions, and activated bentonite with Ca-type bentonite artificially converted into the Na-type by adding thereto several percents by weight of sodium carbonate.

Sepiolite is a clay mineral containing a hydrous magnesium silicic acid salt as a main component, and has a general chemical composition of
Mg₈Si₁₂O₃₀(OH₂)₄(OH)₄·6-8H₂O, and has a porous structure. The pH (3% suspension) is preferably 8.0 to 9.0, more preferably 8.9 to 9.3 from the viewpoint of availability.

### (Chemical sulfur-based gas absorbent)

The chemical sulfur-based gas absorbent is a gas absorbent having an action of chemically absorbing and decomposing a sulfur-based gas to be absorbed. Due to chemical absorption or decomposition, there is little impact of water and the like, and once absorbed sulfur-based gas molecules are unlikely to be desorbed, so that absorption can be efficiently performed. The decomposition products are absorbed by a physical sulfur-based gas absorbent or a chemical sulfur-based gas absorbent. It is preferable that the chemical sulfur-based gas absorbent contains one or more selected from the group consisting of an inorganic substance carrying a metal oxide, glass containing a metal, and glass containing metal ions. It is preferable that the metal oxide in the inorganic substance carrying a metal oxide contains one or more selected from the group consisting of CuO, ZnO and AgO. The inorganic substance carrying a metal oxide is preferably an inorganic porous material such as zeolite. It is preferable that the metal in the glass containing a metal or the metal species of the metal ion in the glass containing metal ions contains one or more selected from the group consisting of Ca, Mg, Na, Cu, Zn, Ag, Pt, Au, Fe, Al and Ni.

The content of the sulfur-based gas absorbent contained in the sulfur-based gas absorbing layer is not particularly limited as long as it absorbs a sulfur-based gas, and the content of the sulfur-based gas absorbent is preferably about 5 parts by mass or more, more preferably about 6 parts by mass or more, still more preferably about 7 parts by mass or more, and preferably about 60 parts by mass or less, more preferably about 55 parts by mass or less, still more preferably 50 parts by mass or less, still more preferably 30 parts by mass or less based on 100 parts by mass of the resin contained in the sulfur-based gas absorbing layer. The content is preferably in the range of 5 to 60 parts by mass, about 5 to 55 parts by mass, about 5 to 50 parts by mass, about 5 to 30 parts by mass, about 6 to 60 parts by mass, about 6 to 55 parts by mass, about 6 to 50 parts by mass, about 6 to 30 parts by mass, about 7 to 60 parts by mass, about 7 to 55 parts by mass, about 7 to 50 parts by mass, or about 7 to 30 parts by mass.

### [Surface coating layer 6]

The exterior material for electrical storage devices according to the present disclosure may include a surface coating layer 6 on the base material layer 1 (on a side opposite to the barrier layer 3 from the base material layer 1) if necessary for the purpose of improving at least one of designability, electrolytic solution resistance, scratch resistance, moldability and the like. The surface coating layer 6 is a layer located on the outermost layer side of the exterior material for electrical storage devices when the electrical storage device is constructed using the exterior material for electrical storage devices.

Examples of the resin for forming the surface coating layer 6 include resins such as polyvinylidene chloride, polyester, polyamide, epoxy resin, acrylic resin, fluororesin, polyurethane, silicone resin and phenol resin, and modified products of these resins. The resin may be a copolymer of these resins or a modified product of the copolymer. Further, a mixture of these resins may be used. The resin is preferably a curable resin. That is, it is preferable that the surface coating layer 6 includes a cured product of a resin composition containing a curable resin.

When the resin forming the surface coating layer 6 is a curable resin, the resin may be any of a one-liquid curable type and a two-liquid curable type, and is preferably a two-liquid curable type. Examples of the two-liquid curable resin include two-liquid curable polyurethane, two-liquid curable polyester and two-liquid curable epoxy resins. Of these, two-liquid curable polyurethane is preferable.

Examples of the two-liquid curable polyurethane include polyurethane which contains a first component containing a polyol compound and a second component containing an isocyanate compound. The polyurethane is preferably a two-liquid curable polyurethane having polyol such as polyester polyol, polyether polyol or acrylic polyol as a first component, and aromatic or aliphatic polyisocyanate as a second component. Examples of the polyurethane include polyurethane containing an isocyanate compound and a polyurethane compound obtained by reacting a polyol compound with an isocyanate compound in advance. Examples of the polyurethane include polyurethane containing a polyol compound and a polyurethane compound obtained by reacting a polyol compound with an isocyanate compound in advance. Examples of the polyurethane include polyurethane obtained by reacting a polyol compound with an isocyanate compound to form a polyurethane compound in advance, and reacting the polyurethane compound with moisture in the air or the like. It is preferable that polyester polyol having a hydroxyl group in the side chain in addition to a hydroxyl group at the end of the repeating unit is used as the polyol compound. Examples of the second component include aliphatic, alicyclic, aromatic and araliphatic isocyanate-based compounds. Examples of the isocyanate-based compound include hexamethylene diisocyanate (HDI), xylylene diisocyanate (XDI), isophorone diisocyanate (IPDI), hydrogenated XDI (H6XDI), hydrogenated MDI (H12MDI), tolylene diisocyanate (TDI), diphenylmethane diisocyanate (MDI) and naphthalene diisocyanate (NDI). Examples of the isocyanate-based compound also include polyfunctional isocyanate-modified products of one or more of these diisocyanates. It is also possible to use a multimer (e.g., a trimer) as the polyisocyanate compound. Examples of the multimer include adducts, biurets, and nurates. The aliphatic isocyanate-based compound is an isocyanate having an aliphatic group and having no aromatic ring, the alicyclic isocyanate-based compound is an isocyanate having an alicyclic hydrocarbon group, and the aromatic isocyanate-based compound is an isocyanate having an aromatic ring. Since the surface coating layer 6 is formed of polyurethane, excellent electrolytic solution resistance is imparted to the exterior material for electrical storage devices.

If necessary, the surface coating layer 6 may contain additives such as a slipping agent, a flame retardant, an anti-blocking agent, an antioxidant, a light stabilizer, a tackifier, an antistatic agent, and a pigment on at least one of the surface and the inside of the surface coating layer 6 according to the functionality and the like to be imparted to the surface coating layer 6 and the surface thereof. The additives are in the form of, for example, fine particles having an average particle size of about 0.5 nm to 5 µm. The average particle size of the additives is a median diameter measured by a laser diffraction/scattering particle size distribution measuring apparatus.

The additives may be either inorganic substances or organic substances. The shape of the additive is not particularly limited, and examples thereof include a spherical shape, a fibrous shape, a plate shape, an amorphous shape and a scaly shape.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acryl, crosslinked styrene, crosslinked polyethylene, benzoguanamine, gold, aluminum, copper and nickel. The additives may be used alone, or may be used in combination of two or more thereof. Of these additives, silica, barium sulfate and titanium oxide are preferable from the viewpoint of dispersion stability, costs, and so on. The surface of the additive may be subjected to various kinds of surface treatments such as insulation treatment and dispersibility enhancing treatment.

The method for forming the surface coating layer 6 is not particularly limited, and examples thereof include a method in which a resin for forming the surface coating layer 6 is applied. When the additive is added to the surface coating layer 6, a resin mixed with the additive may be applied.

In the present disclosure, it is preferable that a slipping agent is present on the surface of the surface coating layer 6 and/or inside the surface coating layer 6 from the viewpoint of enhancing the moldability of the exterior material for electrical storage devices. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylol amide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylene bisbehenamide, hexamethylenehydroxystearic acid amide, N,N'-distearyl adipic acid amide and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyl adipic acid amide and N,N'-dioleylsebacic acid amide. Specific examples of the fatty acid ester amide include stearamide ethyl stearate. Specific examples of the aromatic bisamide include m-xylylenebisstearic acid amide, m-xylylenebishydroxystearic acid amide and N,N'-distearyl isophthalic acid amide. The slipping agents may be used alone, or may be used in combination of two or more thereof, and are preferably used in combination of two or more thereof.

When the slipping agent is present on the surface of the surface coating layer 6, the amount of the slipping agent present is not particularly limited, and is, for example, about 3 mg/m² or more, preferably about 4 mg/m² or more, still more preferably about 5 mg/m² or more. The amount of the slipping agent present on the surface of the surface coating layer 6 is, for example, about 15 mg/m² or less, preferably about 14 mg/m² or less, still more preferably about 10 mg/m² or less. The amount of the slipping agent present on the surface of the surface coating layer 6 is preferably in the range of about 3 to 15 mg/m², about 3 to 14 mg/m², about 3 to 10 mg/m², about 4 to 15 mg/m², about 4 to 14 mg/m², about 4 to 10 mg/m², about 5 to 15 mg/m², about 5 to 14 mg/m², or about 5 to 10 mg/m².

The slipping agent present on the surface of the surface coating layer 6 may be one obtained by exuding the slipping agent contained in a resin for forming the surface coating layer 6, or one obtained by applying the slipping agent to the surface of the surface coating layer 6.

When the surface coating layer 6 contains a colorant, the exterior material for electrical storage devices can be colored. As the colorant, known colorants such as pigments and dyes can be used. The colorants may be used alone, or may be used in combination of two or more thereof.

The type of pigment is not particularly limited, and examples of the organic pigment include azo-based pigments, phthalocyanine-based pigments, quinacridone-based pigments, anthraquinone-based pigments, dioxazine-based pigments, indigothioindigo-based pigments, perinone-perylene-based pigments, isoindolenine-based pigments and benzimidazolone-based pigments. Examples of the inorganic pigment include carbon black-based pigments, titanium oxide-based pigments, cadmium-based pigments, lead-based pigments, chromium-based pigments and iron-based pigments, and also fine powder of mica (mica) and fish scale foil.

Of the colorants, carbon black is preferable for the purpose of, for example, blackening the appearance of the exterior material for electrical storage devices. From the viewpoint of dissipating heat generated from the electrical storage device, mica is preferably used.

The average particle size of the pigment is not particularly limited, and is, for example, about 0.03 to 5 µm, preferably about 0.05 to 2 µm. The average particle size of the pigment is a median diameter measured by a laser diffraction/scattering particle size distribution measuring apparatus.

The content of the colorant in the surface coating layer 6 is not particularly limited as long as the exterior material for electrical storage devices is colored, and the content is, for example, about 5 to 60 mass%, preferably about 10 to 40 mass%.

The thickness of the surface coating layer 6 is not particularly limited as long as the above-mentioned function as the surface coating layer 6 is performed, and it is, for example, about 0.5 to 10 µm, preferably about 1 to 5 µm.

### 3. Method for manufacturing exterior material for electrical storage devices

The method for manufacturing an exterior material for electrical storage devices is not particularly limited as long as a laminate is obtained in which the layers of the exterior material for electrical storage devices according to the present disclosure are laminated. Examples thereof include a method including the step of laminating at least the base material layer 1, the barrier layer 3 and the heat-sealable resin layer 4 in this order.

An example of the method for manufacturing the exterior material for electrical storage devices according to the present disclosure is as follows. First, a laminate including the base material layer 1, the adhesive agent layer 2 and the barrier layer 3 in this order (hereinafter, the laminate may be described as a "laminate A") is formed. Specifically, the laminate A can be formed by a dry lamination method in which an adhesive agent to be used for formation of the adhesive agent layer 2 is applied onto the base material layer 1 or the barrier layer 3, the surface of which is subjected to a chemical conversion treatment if necessary, using a coating method such as a gravure coating method or a roll coating method, and dried, the barrier layer 3 or the base material layer 1 is then laminated, and the adhesive agent layer 2 is cured.

Then, the heat-sealable resin layer 4 is laminated on the barrier layer 3 of the laminate A. When the heat-sealable resin layer 4 is laminated directly on the barrier layer 3, the heat-sealable resin layer 4 may be laminated onto the barrier layer 3 of the laminate A by a method such as a thermal lamination method or an extrusion lamination method. When the adhesive layer 5 is provided between the barrier layer 3 and the heat-sealable resin layer 4, the adhesive layer 5 and the heat-sealable resin layer 4 can be laminated by, for example, (1) an extrusion lamination method, (2) a thermal lamination method, (3) a sandwich lamination method, or (4) a dry lamination method. Examples of the (1) extrusion lamination method include a method in which the adhesive layer 5 and the heat-sealable resin layer 4 are extruded onto the barrier layer 3 of the laminate A to perform lamination (co-extrusion lamination method or tandem lamination method). Examples of the (2) thermal lamination method include a method in which separately, a laminate in which the adhesive layer 5 and the heat-sealable resin layer 4 are laminated is formed, and laminated on the barrier layer 3 of the laminate A, and a method in which a laminate in which the adhesive layer 5 is laminated on the barrier layer 3 of the laminate A is formed, and laminated to the heat-sealable resin layer 4. Examples of the (3) sandwich lamination method include a method in which the laminate A and the heat-sealable resin layer 4 are bonded to each other with the adhesive layer 5 interposed therebetween while the melted adhesive layer 5 is poured between the barrier layer 3 of the laminate A and the heat-sealable resin layer 4 formed in a sheet shape in advance. Examples of the (4) dry lamination method include a method in which an adhesive for forming the adhesive layer 5 is laminated on the barrier layer 3 of the laminate A by, for example, a method in which the adhesive agent is applied by solution coating and dried, or a method in which the applied adhesive is further baked, and on the thus-obtained adhesive layer 5, the heat-sealable resin layer 4 formed in a sheet shape in advance is laminated.

When the surface coating layer 6 is provided, the surface coating layer 6 is laminated on a surface of the base material layer 1 on a side opposite to the barrier layer 3. The surface coating layer 6 can be formed by, for example, coating a surface of the base material layer 1 with the resin that forms the surface coating layer 6. The order of the step of laminating the barrier layer 3 on a surface of the base material layer 1 and the step of laminating the surface coating layer 6 on a surface of the base material layer 1 is not particularly limited. For example, the surface coating layer 6 may be formed on a surface of the base material layer 1, followed by forming the barrier layer 3 on a surface of the base material layer 1 on a side opposite to the surface coating layer 6.

As described above, a laminate including the surface coating layer 6 provided if necessary, the base material layer 1, the adhesive agent layer 2 provided if necessary, the barrier layer 3, the adhesive layer 5 provided if necessary, and the heat-sealable resin layer 4 in this order is formed, and the laminate may be further subjected to a heating treatment for strengthening the bondability of the adhesive agent layer 2 and the adhesive layer 5 provided if necessary.

In the exterior material for electrical storage devices, the layers forming the laminate may be subjected to surface activation treatment such as corona treatment, blast treatment, oxidation treatment or ozone treatment if necessary to improve processing suitability. For example, by subjecting a surface of the base material layer 1, which is opposite to the barrier layer 3, to a corona treatment, the ink printability of the surface of the base material layer 1 can be improved.

### 4. Uses of exterior material for electrical storage devices

The exterior material for electrical storage devices according to the present disclosure is used as a packaging for hermetically sealing and storing electrical storage device elements such as a positive electrode, a negative electrode, and an electrolyte. That is, in a packaging formed of the exterior material for electrical storage devices according to the present disclosure, an electrical storage device element including at least a positive electrode, a negative electrode, and an electrolyte can be housed to obtain an electrical storage device. In other words, the electrical storage device element can be wrapped with the exterior material for electrical storage devices of the present disclosure to form an electrical storage device.

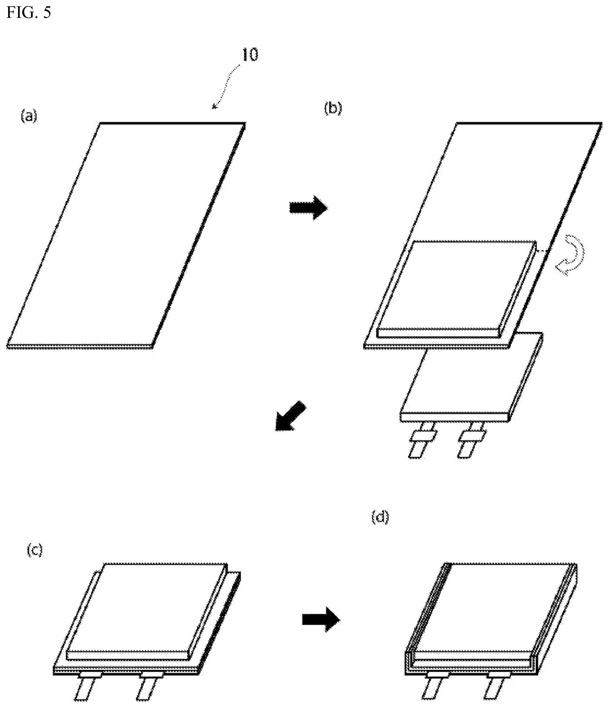

Specifically, an electrical storage device element including at least a positive electrode, a negative electrode, and an electrolyte is covered with the exterior material for electrical storage devices according to the present disclosure such that a flange portion (region where a heat-sealable resin layer is in contact with itself) can be formed on the periphery of the electrical storage device element while a metal terminal connected to each of the positive electrode and the negative electrode protrudes to the outside, and the heat-sealable resin layer at the flange portion is heat-sealed with itself, thereby providing an electrical storage device using the exterior material for electrical storage devices. When the electrical storage device element is housed in the packaging formed of the exterior material for electrical storage devices according to the present disclosure, the packaging is formed in such a manner that the heat-sealable resin portion of the exterior material for electrical storage devices according to the present disclosure is on the inner side (a surface contacting the electrical storage device element). The heat-sealable resin layers of two exterior materials for electrical storage devices may be superposed in such a manner as to face each other, followed by heat-sealing the peripheral portions of the superposed exterior materials for electrical storage devices to form a packaging. Alternatively, as in the example shown in Fig. 5, one exterior material for electrical storage devices may be folded over itself, followed by heat-sealing the peripheral portions to form a packaging. When the exterior material is folded over itself, a packaging may be formed by three-side sealing with the exterior material heat-sealed at sides other than the folding side as in the example shown in Fig. 5, or may be subjected to four-side sealing with the exterior material folded in such a manner that a flange portion can be formed. Note that, when the innermost layer and the outermost layer of the exterior material for electrical storage devices are heat-sealable resin layers, the heat-sealable resin layer of the innermost layer and the heat-sealable resin layer of the outermost layer may be heat-sealed to form a packaging.

The electrical storage device element may be sealed by a lid in addition to the exterior material for electrical storage devices. That is, the exterior material for electrical storage devices and the lid form an outer packaging (outer packaging for an electrical storage device) sealing the electrical storage device element. For example, an electrical storage device element may be housed in a cylindrical exterior material for electrical storage devices, and an opening part may be closed by a lid. In another example, an electrical storage device element in a state of being connected to a lid may be housed in an exterior material for electrical storage devices which is formed in a cylindrical shape so as to form an opening part, and the opening part may be closed by the lid. The lid and the exterior material for electrical storage devices are preferably joined by an arbitrary means. From the viewpoint of reducing a dead space between the electrical storage device element and the exterior material for electrical storage devices in order to improve the volume energy density of the electrical storage device, the exterior material for electrical storage devices is preferably wound around the electrical storage device element and the lid.

The lid can be formed by, for example, a resin molded article, a metal molded article, an exterior material for electrical storage devices, or a combination thereof. In the present disclosure, when the lid is described as a resin molded article, the lid does not include an aspect formed of only a film defined by JIS K6900-1994 [Plastics-Terminology]. When the lid is a metal molded article, a metal terminal can be omitted because the lid also functions as the metal terminal. The lid may contain a resin material and a conductive material.

The exterior material for electrical storage devices according to the present disclosure can be suitably used for electrical storage devices such as batteries (including condensers, capacitors and the like). The exterior material for electrical storage devices according to the present disclosure may be used for either primary batteries or secondary batteries, and is preferably used for secondary batteries. The type of secondary battery to which the exterior material for electrical storage devices according to the present disclosure is applied is not particularly limited, and examples thereof include lithium ion batteries, lithium ion polymer batteries, all-solid-state batteries, semi-solid-state batteries, pseudo-solid-state batteries, polymer batteries, all-polymer batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Of these secondary batteries, preferred subjects to which the exterior material for electrical storage devices according to the present disclosure is applied include lithium ion batteries, lithium ion polymer batteries, and all-solid-state batteries. Example

Hereinafter, the present disclosure will be described in detail by way of examples and comparative examples. However, the present disclosure is not limited to examples.

### <Manufacturing of exterior material for electrical storage devices>

### (Example 1)

As a base material layer, a polyethylene terephthalate film (thickness: 25 µm) was prepared in which a surface to be bonded had been corona-treated. An aluminum alloy foil (JIS H4160:1994 A8021H-O (thickness: 60 µm)) was provided as a barrier layer. A homopolybutylene terephthalate film (homo-PBT: (two types of constituent units are terephthalic acid and 1,4-butanediol)) was used as a heat-sealable resin layer (thickness: 40 µm). Next, using a two-liquid curable urethane adhesive agent (polyester polyol and alicyclic isocyanate compound), the base material layer and the barrier layer were bonded to each other by a dry lamination method to produce a laminate in which a base material layer, an adhesive agent layer and a barrier layer were laminated in this order.

Next, using a two-liquid curable urethane adhesive agent (polyester polyol and alicyclic isocyanate compound), the obtained laminate on the barrier layer side and the heat-sealable resin layer were bonded to each other by a dry lamination method to laminate an adhesive layer (4 µm) and a heat-sealable resin layer on the barrier layer. Next, the obtained laminate was aged and heated to obtain an exterior material for electrical storage devices including a laminate in which a base material layer, an adhesive agent layer, a barrier layer, an adhesive layer, and a heat-sealable resin layer were laminated in this order.

### (Example 2)

An exterior material for electrical storage devices including a laminate in which a base material layer, an adhesive agent layer, a barrier layer, an adhesive layer, and a heat-sealable resin layer were laminated in this order was obtained in the same manner as in Example 1, except that an aluminum alloy foil (JIS H4160:1994 A8021H-O, thickness: 40 µm) was used as the barrier layer, and the following copolymer polybutylene terephthalate film was used as the heat-sealable resin layer (thickness: 40 µm).

The heat-sealable resin layer of Example 2 was formed of a copolymer polybutylene terephthalate film (copolymer PBT). In the copolymer polybutylene terephthalate film, terephthalic acid and 1,4-butanediol forming a polybutylene terephthalate structure as a main component form two constituent units, and the polyester structure B is block-polymerized as an accessory component into the polybutylene terephthalate structure with respect to the polybutylene terephthalate structure. The polyester structure B is a structure which is introduced into the resin by copolymerization of dodecanedioic acid (dodecane diacid) as a third type of constituent unit with the 1,4-butanediol. Therefore, the resin for forming the film contains a polybutylene terephthalate structure (terephthalic acid and 1,4-butanediol as monomer units are two types of constituent units) and the polyester structure B (dodecanedioic acid as a monomer unit is one type of constituent unit), and has a structure in which a total of three types of constituent units are copolymerized. In the copolymer polybutylene terephthalate film of the heat-sealable resin layer, 10 mass% of the polyester structure B is contained (the molar ratio of terephthalic acid, 1,4-butanediol, and dodecane diacid as monomer units (terephthalic acid residue : 1,4-butanediol residue : dodecane diacid residue) is a ratio of 100 : 113 : 12).

### (Example 3)

An exterior material for electrical storage devices including a laminate in which a base material layer, an adhesive agent layer, a barrier layer, an adhesive layer, and a heat-sealable resin layer were laminated in this order was obtained in the same manner as in Example 2, except that an aluminum alloy foil (JIS H4160:1994 A8021H-O, thickness: 60 µm) was used as the barrier layer.

### (Example 4)

An exterior material for electrical storage devices including a laminate in which a base material layer, an adhesive agent layer, a barrier layer, an adhesive layer, and a heat-sealable resin layer were laminated in this order was obtained in the same manner as in Example 3, except that a polyethylene terephthalate film (thickness: 38 µm) in which a surface to be bonded had been corona-treated was used as the base material layer.

### (Example 5)

An exterior material for electrical storage devices including a laminate in which a base material layer, an adhesive agent layer, a barrier layer, an adhesive layer, and a heat-sealable resin layer were laminated in this order was obtained in the same manner as in Example 3, except that a polyethylene terephthalate film (thickness: 6 µm) in which a surface to be bonded had been corona-treated was used as the base material layer.

### (Example 6)

An exterior material for electrical storage devices including a laminate in which a base material layer, an adhesive agent layer, a barrier layer, an adhesive layer, and a heat-sealable resin layer were laminated in this order was obtained in the same manner as in Example 3, except that a polyethylene terephthalate film (thickness: 12 µm) in which a surface to be bonded had been corona-treated was used as the base material layer.

### (Example 7)

An exterior material for electrical storage devices including a laminate in which a base material layer, an adhesive agent layer, a barrier layer, an adhesive layer, and a heat-sealable resin layer were laminated in this order was obtained in the same manner as in Example 1, except that an aluminum alloy foil (JIS H4160:1994 A8021H-O, thickness: 40 µm) was used as the barrier layer, and the following copolymer polybutylene terephthalate film was used as the heat-sealable resin layer (thickness: 40 µm).

The heat-sealable resin layer of Example 7 was formed of a copolymer polybutylene terephthalate film (copolymer PBT). In the copolymer polybutylene terephthalate film, terephthalic acid and 1,4-butanediol forming a polybutylene terephthalate structure as a main component form two constituent units, and the polyester structure B is block-polymerized as an accessory component into the polybutylene terephthalate structure with respect to the polybutylene terephthalate structure. The polyester structure B is a structure which is introduced into the resin by copolymerization as a third type of constituent unit with the polyether. Therefore, the resin for forming the film contains a polybutylene terephthalate structure (terephthalic acid and 1,4-butanediol as monomer units are two types of constituent units) and the polyester structure B (polyether as a monomer unit is one type of constituent unit), and has a structure in which a total of three types of constituent units are copolymerized. In the copolymer polybutylene terephthalate film of the heat-sealable resin layer, 20 mass% of the polyester structure B is contained (the molar ratio of terephthalic acid, 1,4-butanediol, and polyether as monomer units (terephthalic acid residue : 1,4-butanediol residue : polyether residue) is a ratio of 100 : 85 : 15).

### (Comparative Example 1)

As a base material layer, a multilayer film was prepared in which a polyethylene terephthalate film (thickness: 12 µm) and a nylon film (thickness: 12 µm) were bonded to each other with a two-liquid curable urethane adhesive agent (polyester polyol and aromatic isocyanate compound, thickness after curing: 3 µm). An aluminum alloy foil (JIS H4160:1994 A8021H-O (thickness: 60 µm)) was provided as a barrier layer. Next, using a two-liquid curable urethane adhesive agent (polyester polyol and aromatic isocyanate compound), the nylon film side of the base material layer and the barrier layer were bonded to each other by a dry lamination method to produce a laminate in which a base material layer, an adhesive agent layer, and a barrier layer were laminated in this order.

Next, maleic anhydride-modified polypropylene as an adhesive layer and polypropylene as a heat-sealable resin layer were subjected to co-extrusion molding to laminate the adhesive layer (40 µm) and the heat-sealable resin layer (40 µm) on the barrier layer. Next, the obtained laminate was aged and heated to obtain an exterior material for electrical storage devices including a laminate in which a base material layer, an adhesive agent layer, a barrier layer, an adhesive layer, and a heat-sealable resin layer were laminated in this order.

### (Comparative Example 2)

As a base material layer, a polyethylene terephthalate film (thickness: 25 µm) was prepared in which a surface to be bonded had been corona-treated. An aluminum alloy foil (JIS H4160:1994 A8021H-O (thickness: 60 µm)) was provided as a barrier layer. Next, using a two-liquid curable urethane adhesive agent (polyester polyol and alicyclic isocyanate compound), the base material layer and the barrier layer were bonded to each other by a dry lamination method to produce a laminate in which a base material layer, an adhesive agent layer and a barrier layer were laminated in this order.

Next, maleic anhydride-modified polypropylene as an adhesive layer and polypropylene as a heat-sealable resin layer were subjected to co-extrusion molding to laminate the adhesive layer (40 µm) and the heat-sealable resin layer (40 µm) on the barrier layer. Next, the obtained laminate was aged and heated to obtain an exterior material for electrical storage devices including a laminate in which a base material layer, an adhesive agent layer, a barrier layer, an adhesive layer, and a heat-sealable resin layer were laminated in this order.

### (Comparative Example 3)

An exterior material for electrical storage devices including a laminate in which a base material layer, an adhesive agent layer, a barrier layer, an adhesive layer, and a heat-sealable resin layer were laminated in this order was obtained in the same manner as in Example 7, except that a homopolybutylene terephthalate film (homo-PBT: (two types of constituent units are terephthalic acid and 1,4-butanediol) thickness: 40 µm) was used as the heat-sealable resin layer.

### (Comparative Example 4)

An exterior material for electrical storage devices including a laminate in which a base material layer, an adhesive agent layer, a barrier layer, an adhesive layer, and a heat-sealable resin layer were laminated in this order was obtained in the same manner as in Example 1, except that a homopolybutylene terephthalate film (homo-PBT: (two types of constituent units are terephthalic acid and 1,4-butanediol) thickness: 25 µm) was used as the heat-sealable resin layer.

### <Measurement of tensile rupture strength>

The tensile rupture strength of the exterior material for electrical storage devices was measured by the following method. The results are shown in Table 1. The tensile rupture strength of the exterior material for electrical storage devices in a machine direction was measured using a tensile tester by a method in accordance with a provision of JIS K7127:1999. Measurement conditions were such that a shape in accordance with dumbbell no. 7 was used for a sample shape, a reference line distance was 10 mm, a tensile speed was 0.5 mm/min, and a test environment was 120°C, and an average value obtained by performing measurement three times was adopted.

### <Measurement of creep resistance characteristic>

The creep resistance characteristic of the exterior material for electrical storage devices was measured by the following method. The results are shown in Table 1. The exterior material for electrical storage devices was cut out to have a width of 60 mm in a transverse direction and a length of 150 mm in a machine direction, was double-folded such that the heat-sealable resin layer is positioned on the inner side, and was heat-sealed such that a thickness of the heat-sealable resin layer was in a range of 60% or more and 95% or less of a thickness of the heat-sealable resin layer before sealing (that is, the exterior material for electrical storage devices was cut out to have a width of 60 mm in the transverse direction and a length of 150 mm in the machine direction, the exterior material for electrical storage devices was double-folded in the machine direction at an intermediate position in the machine direction such that the heat-sealable resin layers faced to each other, and heat-sealing was performed at a position retracted by 10 mm in the machine direction from the fold with a 7-mm heat seal bar such that a thickness of the heat-sealable resin layer was in a range of 60% or more and 95% or less before sealing). The heat-sealed exterior material for electrical storage devices was cut out to have a width of 15 mm so as to obtain a sample. Both of mutually opposing ends of the sample were pasted to a SUS plate (stainless steel plate) with an adhesive agent (instantaneous adhesive agent: cyanoacrylate-based adhesive agent (CEMEDINE PPX (CEMEDINE is a registered trademark)), respectively, and a weight of 2 kg was applied to one side. The end on the opposite side was hung from the top of a thermostatic bath, and stored in the thermostatic bath at 150°C for creep resistance characteristic at 150°C and stored in the thermostatic bath at 80°C for creep resistance characteristic at 80°C. Creep resistance was evaluated based on a time until a sealing portion is opened. A SUS plate having a thickness of 2 mm, a width of 30 mm, a length of 100 mm, and a weight of 42.5 g and having one S-shaped side was used.

### (Evaluation criteria of creep resistance characteristic (150°C))

A: The sealing portion does not open for 10 minutes or more.

C: The sealing portion opens in less than 10 minutes.

### (Evaluation criteria of creep resistance characteristic (80°C))

A: The sealing portion does not open for 10 days or more.

C: The sealing portion opens in less than 10 days.

### <Measurement of sealing strength in environment of 150°C>

As specified in JIS K 7127:1999, the sealing strength of the exterior material at a measurement temperature of 150°C was measured as follows. A test piece obtained by cutting the exterior material into a strip shape having a width of 15 mm in a transverse direction is prepared by the following procedure. Specifically, as shown in Fig. 6, each exterior material was cut to a size of 60 mm (transverse direction) × 200 mm (machine direction) (Fig. 6a). Next, the exterior material was double-folded in the machine direction at the position of the fold P (intermediate in the machine direction) in such a manner that the heat-sealable resin layers faced each other (Fig. 6b). The heat-sealable resin layers were heat-sealed on the inner side in the machine direction by 10 mm from the fold P under the conditions of a seal width of 7 mm, a temperature of 240°C, a surface pressure of 1 MPa and 3 seconds (Fig. 6c). In Fig. 6c, the shaded portion S is a heat-sealed portion. Next, a test piece 13 was obtained by cutting the exterior material in the machine direction (cutting the exterior material at the position of the two-dot chain line in Fig. 6d) in such a manner that the width in the transverse direction was 15 mm (Fig. 6e). Next, the test piece 13 was left standing in an environment at a temperature of 150°C for 2 minutes, and the heat-sealable resin layer at the heat-sealed part was delaminated at a rate of 300 mm/min with a tensile tester (AG-Xplus (trade name) manufactured by SHIMADZU CORPORATION) in an environment at a temperature of 150°C (Fig. 7). The maximum strength during the delamination was taken as sealing strength (N/15 mm). The chuck-to-chuck distance was 50 mm. The evaluation criteria of sealing strength are as follows. Criteria A and B correspond to passing. The measurement was performed three times, and the average value was evaluated. The results are shown in Table 1.

### (Evaluation criteria of sealing strength)

A: The sealing strength is 40 N/15 mm or more.

B: The sealing strength is 35 N/15 mm or more and less than 40 N/15 mm.

C: The sealing strength is less than 35 N/15 mm.

### <Evaluation of load resistance of electrical storage device>

The load resistance of the exterior material for electrical storage devices was evaluated by the following method. The results are shown in Table 1. Two exterior materials for electrical storage devices were cut out to have a width of 300 mm in the transverse direction and a length of 300 mm in the machine direction. The heat-sealable resin layers of the two exterior materials for electrical storage devices were opposed to each other, two sides of 200 mm opposed to each other were heat-sealed (seal width: 7 mm) under the conditions of 240°C and a surface pressure of 1 MPa for 3 seconds, and the remaining one side of 300 mm was also heat-sealed (seal width: 7 mm) to bring about a three-side sealed state. Next, a stainless steel plate having a length of 97 mm, a width of 70 mm, a thickness of 38 mm, and a weight of 2100 g was inserted between the heat-sealable resin layers (the length of the stainless steel plate is 97 mm in the insertion direction). Two corners of one side of the opened pouch (inner size: 286 mm × 293 mm) thus obtained were fixed with clips, and the pouch was left to stand still for 3 minutes in a suspended state so that the machine direction was the vertical direction, then the exterior material for electrical storage devices was observed, and evaluation of A and C was performed based on the following evaluation criteria 1. A stainless steel plate having a weight of 2100 g was inserted between the heat-sealable resin layers of the pouch, the weight at which the exterior material for electrical storage devices is broken was examined, and evaluation of A to C was performed based on the following evaluation criteria 2.

### (Evaluation criteria 1 of load resistance)

A: There are no pinholes and no tearing in the exterior material for electrical storage devices.

C: There are pinholes or tearing in the exterior material for electrical storage devices.

### (Evaluation criteria 2 of load resistance)

A: The exterior material for electrical storage devices is not broken at 4200 g.

C: The exterior material for electrical storage devices is broken at less than 4200 g.

**[Table 1]**

| Table 1 | Exterior material for electrical storage devices | | | | | | |
|---|---|---|---|---|---|---|---|
| | Laminated configuration | Tensile rupture strength [Pa] | Creep resistance characteristic (150°C) | Creep resistance characteristic (80°C) | Sealing strength evaluation in environment of 150°C [N/15mm] | Load resistance evaluation (pinholes and tearing) | Load resistance evaluation (breaking) |
| Example 1 | PET(25)/DL(4)/AL(60)/DL(4)/Homo-PBT(40) | 192 | A 14 minutes | A 180 days or more | 45 | A | A |
| Example 2 | PET(25)/DL(4)/AL(40)/DL(4)/Copolymer PBT(40) | 187 | A 20 minutes or more | A 180 days or more | 60 | A | A |
| Example 3 | PET(25)/DL(4)/AL(60)/DL(4)/Copolymer PBT(40) | 200 | A 20 minutes or more | A 180 days or more | 72 | A | A |
| Example 4 | PET(38)/DL(4)/AL(60)/DL(4)/Copolymer PBT(40) | 234 | A 20 minutes or more | A 180 days or more | 75 | A | A |
| Example 5 | PET(6)/DL(4)/AL(60)/DL(4)/Copolymer PBT(40) | 185 | A 20 minutes or more | A 180 days or more | 70 | A | A |
| Example 6 | PET(12)/DL(4)/AL(60)/DL(4)/Copolymer PBT(40) | 189 | A 20 minutes or more | A 180 days or more | 71 | A | A |
| Example 7 | PET(25)/DL(4)/AL(40)/DL(4)/Copolymer PBT(40) | 182 | A 13 minutes | A 180 days or more | 55 | A | A |
| Comparative Example 1 | PET(12)/DL(3)/Ny(12)/DL(4)/AL(60)/PPa(40)/PP(40) | 121 | C 5 minutes | C 8 days | 0 | A | C |
| Comparative Example 2 | PET(25)/DL(4)/AL(60)/PPa(40)/PP(40) | 138 | C 5 minutes | C 8 days | 0 | A | A |
| Comparative Example 3 | PET(25)/DL(4)/AL(40)/DL(4)/Homo-PBT(40) | 174 | A 11 minutes | A 180 days or more | 38 | C | C |
| Comparative Example 4 | PET(25)/DL(4)/AL(60)/DL(4)/Homo-PBT(25) | 178 | C 7 minutes | C 2 days | 29 | C | C |

In the laminated configuration of the exterior material for electrical storage devices in Table 1, PET means polyethylene terephthalate, Ny means nylon, PPa means maleic anhydride-modified polypropylene, PP means polypropylene, DL means a layer (adhesive agent layer or adhesive layer) formed of an adhesive agent using a dry lamination method, and PBT means polybutylene terephthalate. The numerical value in parentheses represents the thickness (µm), and "/" represents a partition between layers.

As described above, the present disclosure provides the invention of aspects as shown below.

Item 1. An exterior material for electrical storage devices, including a laminate including at least a base material layer, a barrier layer, and a heat-sealable resin layer in this order from the outside, in which
a tensile rupture strength as measured by the following method is 180 MPa or more, and a creep resistance characteristic as measured by the following method is 10 minutes or more,
the tensile rupture strength is measured as follows:
   the tensile rupture strength of the exterior material for electrical storage devices in a machine direction is measured using a tensile tester by a method in accordance with a provision of JIS K7127:1999; and measurement conditions are such that a shape in accordance with dumbbell no. 7 is used for a sample shape, a reference line distance is 10 mm, a tensile speed is 0.5 mm/min, and a test environment is 120°C, and an average value obtained by performing measurement three times is adopted, and
   the creep resistance characteristic is measured as follows:
      the exterior material for electrical storage devices is cut out to have a width of 60 mm in a transverse direction and a length of 150 mm in a machine direction, is double-folded such that the heat-sealable resin layer is positioned on the inner side, and is heat-sealed at a position of 10 mm from the fold with a 7-mm heat seal bar such that a thickness of the heat-sealable resin layer is in a range of 60% or more and 95% or less of a thickness of the heat-sealable resin layer before sealing (that is, the exterior material for electrical storage devices is cut out to have a width of 60 mm in the transverse direction and a length of 150 mm in the machine direction, the exterior material for electrical storage devices is double-folded in the machine direction at an intermediate position in the machine direction such that the heat-sealable resin layers face to each other, and heat-sealing is performed at a position retracted by 10 mm in the machine direction from the fold with a 7-mm heat seal bar such that a thickness of the heat-sealable resin layer is in a range of 60% or more and 95% or less before sealing); the heat-sealed exterior material for electrical storage devices is cut out to have a width of 15 mm so as to obtain a sample; Both of mutually opposing ends of the sample are pasted to a SUS plate (stainless steel plate) with an adhesive agent, respectively, and a weight of 2 kg is applied to one side. The end on the opposite side is hung from the top of a thermostatic bath and stored in the thermostatic bath at 150°C. Creep resistance is evaluated based on a time until a sealing portion is opened. A SUS plate having a thickness of 2 mm, a width of 30 mm, a length of 100 mm, and a weight of 42.5 g and having one S-shaped side is used.

Item 2. The exterior material for electrical storage devices according to item 1, in which the heat-sealable resin layer contains polybutylene terephthalate.

Item 3. The exterior material for electrical storage devices according to item 1 or 2, in which the heat-sealable resin layer contains at least one of homopolybutylene terephthalate and copolymer polybutylene terephthalate.

Item 4. The exterior material for electrical storage devices according to item 3, in which the copolymer polybutylene terephthalate further includes at least one selected from the group consisting of a polyether structure and a polyester structure B in addition to a polybutylene terephthalate structure, and
the polyester structure B is a structure different from the polybutylene terephthalate structure.

Item 5. The exterior material for electrical storage devices according to item 4, in which the polyester structure B includes a polycondensation structure of at least one selected from the group consisting of isophthalic acid, dodecanedioic acid, and sebacic acid and 1,4-butanediol.

Item 6. The exterior material for electrical storage devices according to any one of items 1 to 5, in which a thickness of the barrier layer is 40 µm or more.

Item 7. The exterior material for electrical storage devices according to any one of items 1 to 6, in which a thickness of the heat-sealable resin layer is 30 µm or more.

Item 8. The exterior material for electrical storage devices according to any one of items 1 to 5, in which a sealing strength in an environment of 150°C as measured by the following measurement method in accordance with a provision of JIS K7127:1999 is 40 N/15 mm or more,
the measurement method of the sealing strength in an environment of 150°C is as follows:
a test piece obtained by cutting the exterior material for electrical storage devices into a strip shape having a width of 15 mm in a transverse direction is prepared by the following procedure; the exterior material for electrical storage devices is double-folded in the machine direction at a position of the fold (intermediate in the machine direction) such that the heat-sealable resin layers face each other; the heat-sealable resin layers are heat-sealed on the inner side in the machine direction by 10 mm from the fold under the conditions of a seal width of 7 mm, a temperature of 240°C, a surface pressure of 1 MPa, and 3 seconds to form a heat-sealed part; cutting in the machine direction is then performed to have a width of 15 mm in the transverse direction so as to obtain a test piece; the test piece is then allowed to stand in an environment of a temperature of 150°C for 2 minutes, and the heat-sealable resin layer at the heat-sealed part is delaminated at a speed of 300 mm/min with a tensile tester in an environment of 150°C; the maximum strength during the delamination is taken as a sealing strength (N/15 mm); and A chuck-to-chuck distance is 50 mm.

Item 9. The exterior material for electrical storage devices according to any one of items 1 to 8, further including an adhesive layer between the barrier layer and the heat-sealable resin layer.

Item 10. The exterior material for electrical storage devices according to any one of items 1 to 9, further including an adhesive agent layer between the base material layer and the barrier layer.

Item 11. The exterior material for electrical storage devices according to any one of items 1 to 10, in which the exterior material for electrical storage devices is to be used for an all-solid-state battery, a semi-solid-state battery, a pseudo-solid-state battery, a polymer battery, or an all-polymer battery.

Item 12. A method for manufacturing an exterior material for electrical storage devices, the method including a step of obtaining a laminate including at least a base material layer, a barrier layer, and a heat-sealable resin layer laminated in this order from the outside, in which
the laminate has a tensile rupture strength of 180 MPa or more as measured by the following method and a creep resistance characteristic of 10 minutes or more as measured by the following method,
the tensile rupture strength is measured as follows:
   The tensile rupture strength of the exterior material for electrical storage devices in a machine direction is measured using a tensile tester by a method in accordance with a provision of JIS K7127:1999. Measurement conditions are such that a shape in accordance with dumbbell no. 7 is used for a sample shape, a reference line distance is 10 mm, a tensile speed is 0.5 mm/min, and a test environment is 120°C, and an average value obtained by performing measurement three times is adopted.

### <Measurement of creep resistance characteristic>

The exterior material for electrical storage devices is cut out to have a width of 60 mm in a transverse direction and a length of 150 mm in a machine direction, is double-folded such that the heat-sealable resin layer is positioned on the inner side, and is heat-sealed at a position of 10 mm from the fold with a 7-mm heat seal bar such that a thickness of the heat-sealable resin layer is in a range of 60% or more and 95% or less of a thickness of the heat-sealable resin layer before sealing (that is, the exterior material for electrical storage devices is cut out to have a width of 60 mm in the transverse direction and a length of 150 mm in the machine direction, the exterior material for electrical storage devices is double-folded in the machine direction at an intermediate position in the machine direction such that the heat-sealable resin layers face to each other, and heat-sealing is performed at a position retracted by 10 mm in the machine direction from the fold with a 7-mm heat seal bar such that a thickness of the heat-sealable resin layer is in a range of 60% or more and 95% or less before sealing). The heat-sealed exterior material for electrical storage devices is cut out to have a width of 15 mm so as to obtain a sample. Both of mutually opposing ends of the sample are pasted to a SUS plate (stainless steel plate) with an adhesive agent, respectively, and a weight of 2 kg is applied to one side. The end on the opposite side is hung from the top of a thermostatic bath and stored in the thermostatic bath at 150°C. Creep resistance is evaluated based on a time until a sealing portion is opened. A SUS plate having a thickness of 2 mm, a width of 30 mm, a length of 100 mm, and a weight of 42.5 g and having one S-shaped side is used.

Item 13. The method for manufacturing an exterior material for electrical storage devices according to item 12, in which the exterior material for electrical storage devices is to be used for an all-solid-state battery, a semi-solid-state battery, a pseudo-solid-state battery, a polymer battery, or an all-polymer battery.

Item 14. An electrical storage device in which an electrical storage device element including at least a positive electrode, a negative electrode, and an electrolyte is housed in a packaging formed of the exterior material for electrical storage devices according to any one of items 1 to 11.

Item 15. An all-solid-state battery in which an electrical storage device element including at least a positive electrode, a negative electrode, and an electrolyte is housed in a packaging formed of the exterior material for electrical storage devices according to any one of items 1 to 11.

### Reference Signs List

1 Base material layer
2 Adhesive agent layer
3 Barrier layer
4 Heat-sealable resin layer
5 Adhesive layer
6 Surface coating layer
10 Exterior material for electrical storage devices
13 Test piece

## Claims

1. An exterior material for electrical storage devices, comprising a laminate including at least a base material layer, a barrier layer, and a heat-sealable resin layer in this order from the outside, wherein
a tensile rupture strength as measured by the following method is 180 MPa or more, and a creep resistance characteristic as measured by the following method is 10 minutes or more,
the tensile rupture strength is measured as follows:
the tensile rupture strength of the exterior material for electrical storage devices in a machine direction is measured using a tensile tester by a method in accordance with a provision of JIS K7127:1999; and measurement conditions are such that a shape in accordance with dumbbell no. 7 is used for a sample shape, a reference line distance is 10 mm, a tensile speed is 0.5 mm/min, and a test environment is 120°C, and an average value obtained by performing measurement three times is adopted, and
the creep resistance characteristic is measured as follows:
the exterior material for electrical storage devices is cut out to have a width of 60 mm in a transverse direction and a length of 150 mm in a machine direction, is double-folded such that the heat-sealable resin layer is positioned on the inner side, and is heat-sealed at a position of 10 mm from the fold with a 7-mm heat seal bar such that a thickness of the heat-sealable resin layer is in a range of 60% or more and 95% or less of a thickness of the heat-sealable resin layer before sealing; the heat-sealed exterior material for electrical storage devices is cut out to have a width of 15 mm so as to obtain a sample; both of mutually opposing ends of the sample are pasted to a SUS plate with an adhesive agent, respectively, and a weight of 2 kg is applied to one side; the end on the opposite side is hung from the top of a thermostatic bath and stored in the thermostatic bath at 150°C; creep resistance is evaluated based on a time until a sealing portion is opened; and a SUS plate having a thickness of 2 mm, a width of 30 mm, a length of 100 mm, and a weight of 42.5 g and having one S-shaped side is used.

2. The exterior material for electrical storage devices according to claim 1, wherein the heat-sealable resin layer contains polybutylene terephthalate.

3. The exterior material for electrical storage devices according to claim 1 or 2, wherein the heat-sealable resin layer contains at least one of homopolybutylene terephthalate and copolymer polybutylene terephthalate.

4. The exterior material for electrical storage devices according to claim 3, wherein the copolymer polybutylene terephthalate further includes at least one selected from the group consisting of a polyether structure and a polyester structure B in addition to a polybutylene terephthalate structure, and
the polyester structure B is a structure different from the polybutylene terephthalate structure.

5. The exterior material for electrical storage devices according to claim 4, wherein the polyester structure B includes a polycondensation structure of at least one selected from the group consisting of isophthalic acid, dodecanedioic acid, and sebacic acid and 1,4-butanediol.

6. The exterior material for electrical storage devices according to claim 1 or 2, wherein a thickness of the barrier layer is 40 µm or more.

7. The exterior material for electrical storage devices according to claim 1 or 2, wherein a thickness of the heat-sealable resin layer is 30 µm or more.

8. The exterior material for electrical storage devices according to claim 1 or 2, wherein a sealing strength in an environment of 150°C as measured by the following measurement method in accordance with a provision of JIS K7127:1999 is 40 N/15 mm or more,
the measurement method of the sealing strength in an environment of 150°C is as follows:
a test piece obtained by cutting the exterior material for electrical storage devices into a strip shape having a width of 15 mm in a transverse direction is prepared by the following procedure;
the exterior material for electrical storage devices is double-folded in the machine direction at a position of the fold (intermediate in the machine direction) such that the heat-sealable resin layers face each other; the heat-sealable resin layers are heat-sealed on the inner side in the machine direction by 10 mm from the fold under the conditions of a seal width of 7 mm, a temperature of 240°C, a surface pressure of 1 MPa, and 3 seconds to form a heat-sealed part; cutting in the machine direction is then performed to have a width of 15 mm in the transverse direction so as to obtain a test piece;
the test piece is then allowed to stand in an environment of a temperature of 150°C for 2 minutes, and the heat-sealable resin layer at the heat-sealed part is delaminated at a speed of 300 mm/min with a tensile tester in an environment of 150°C; the maximum strength during the delamination is taken as a sealing strength (N/15 mm); and a chuck-to-chuck distance is 50 mm.

9. The exterior material for electrical storage devices according to claim 1 or 2, further comprising an adhesive layer between the barrier layer and the heat-sealable resin layer.

10. The exterior material for electrical storage devices according to claim 1 or 2, further comprising an adhesive agent layer between the base material layer and the barrier layer.

11. The exterior material for electrical storage devices according to claim 1 or 2, wherein the exterior material for electrical storage devices is to be used for an all-solid-state battery, a semi-solid-state battery, a pseudo-solid-state battery, a polymer battery, or an all-polymer battery.

12. A method for manufacturing an exterior material for electrical storage devices, the method comprising a step of obtaining a laminate including at least a base material layer, a barrier layer, and a heat-sealable resin layer laminated in this order from the outside, wherein
the laminate has a tensile rupture strength of 180 MPa or more as measured by the following method and a creep resistance characteristic of 10 minutes or more as measured by the following method,
the tensile rupture strength is measured as follows:
the tensile rupture strength of the exterior material for electrical storage devices in a machine direction is measured using a tensile tester by a method in accordance with a provision of JIS K7127:1999; and measurement conditions are such that a shape in accordance with dumbbell no. 7 is used for a sample shape, a reference line distance is 10 mm, a tensile speed is 0.5 mm/min, and a test environment is 120°C, and an average value obtained by performing measurement three times is adopted, and
the creep resistance characteristic is measured as follows:
the exterior material for electrical storage devices is cut out to have a width of 60 mm in a transverse direction and a length of 150 mm in a machine direction, is double-folded such that the heat-sealable resin layer is positioned on the inner side, and is heat-sealed such that a thickness of the heat-sealable resin layer is in a range of 60% or more and 95% or less of a thickness of the heat-sealable resin layer before sealing; the heat-sealed exterior material for electrical storage devices is cut out to have a width of 15 mm so as to obtain a sample; both of mutually opposing ends of the sample are pasted to a SUS plate with an adhesive agent, respectively, and a weight of 2 kg is applied to one side; the end on the opposite side is hung from the top of a thermostatic bath and stored in the thermostatic bath at 150°C; a SUS plate having a thickness of 2 mm, a width of 30 mm, a length of 100 mm, and a weight of 42.5 g and having one S-shaped side is used; and creep resistance is evaluated based on a time until a sealing portion is opened.

13. The method for manufacturing an exterior material for electrical storage devices according to claim 12, wherein the exterior material for electrical storage devices is to be used for an all-solid-state battery, a semi-solid-state battery, a pseudo-solid-state battery, a polymer battery, or an all-polymer battery.

14. An electrical storage device in which an electrical storage device element including at least a positive electrode, a negative electrode, and an electrolyte is housed in a packaging formed of the exterior material for electrical storage devices according to claim 1 or 2.

15. An all-solid-state battery in which an electrical storage device element including at least a positive electrode, a negative electrode, and an electrolyte is housed in a packaging formed of the exterior material for electrical storage devices according to claim 1 or 2.
